(19) **Europäisches Patentamt**
**European Patent Office**
**Office européen des brevets**

(11) **EP 3 700 257 A1**

(12) **EUROPEAN PATENT APPLICATION**

(43) Date of publication:
**26.08.2020 Bulletin 2020/35**

(51) Int Cl.:
***H04W 36/00*** *(2009.01)*

(21) Application number: **19158914.2**

(22) Date of filing: **22.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Panasonic Intellectual Property Corporation**
**of America**
**Torrance, CA 90503 (US)**

(72) Inventors:
- TAO, Ming-Hung
  **Langen 63225 (DE)**
- SUZUKI, Hidetoshi
  **Chuo-ku, Osaka 540-6207 (JP)**
- SHAH, Rikin
  **63225 Langen (DE)**
- NISHIO, Akihiko
  **Chuo-ku, Osaka 540-6207 (JP)**

(74) Representative: **Grünecker Patent- und Rechtsanwälte**
**PartG mbB**
**Leopoldstraße 4**
**80802 München (DE)**

(54) **USER EQUIPMENT INVOLVED IN MEASUREMENT REPORTING AND HANDOVERS**

(57) The present disclosure relates to a user equipment (UE) that comprises processing circuitry that performs power-related measurements on at least one radio carrier and generates measurement results based thereon. The reporting of the measurement results is based on a report trigger condition. The processing circuitry determines whether or not to adjust the measurement results and/or the report trigger condition so as to trigger the reporting of the measurement results earlier than without the adjustment. In case of determining to adjust, the processing circuitry adjusts the measurement results and/or the report trigger condition so as to trigger the reporting of the measurement results earlier than without the adjustment. The processing circuitry, after the adjustment, determines whether or not the report trigger condition is fulfilled for reporting the measurement results. A transmitter transmits a measurement report including the measurement results, in case the reporting of the measurement results is triggered.

Fig. 16

**Description**

**FIELD OF THE PRESENT DISCLOSURE**

The present disclosure is directed to methods, devices and articles in communication systems, such as 3GPP communication systems.

**TECHNICAL BACKGROUND**

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

**SUMMARY**

One non-limiting and exemplary embodiment facilitates providing improved procedures for measurement and handover.

In an embodiment, the techniques disclosed here feature a user equipment comprising processing circuitry, which in operation, performs power-related measurements on at least one radio carrier and generates measurement results based on the performed measurements. The reporting of the measurement results by the UE is based on at least one report trigger condition to be fulfilled. The processing circuitry determines whether or not to adjust at least one of the measurement results and the at least one report trigger condition so as to trigger the reporting of the measurement results earlier than without the adjustment. In case of determining to adjust, the processing circuitry adjusts at least one of the measurement results and the at least one report trigger condition so as to trigger the reporting of the measurement results earlier than without the adjustment. The processing circuitry, after the adjustment, determines whether or not the at least one report trigger condition is fulfilled for reporting the measurement results based on the at least one report trigger condition and the measurement results. A transmitter of the UE transmits a measurement report including the measurement results, in case the reporting of the measurement results is triggered.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

| | |
|---|---|
| **Fig. 1** | shows an exemplary architecture for a 3GPP NR system; |
| **Fig. 2** | shows an exemplary user and control plane architecture for the LTE eNB, gNB, and UE; |
| **Fig. 3** | illustrates an exemplary NG RAN architecture based on a transparent satellite, |
| **Fig. 4** | illustrates an exemplary NG RAN architecture based on a regenerative satellite, |
| **Fig. 5** | illustrates the exemplary and simplified structure of a UE and a gNB, |
| **Fig. 6** | illustrates a structure of the UE according to an exemplary implementation of an embodiment for an improved measurement and reporting procedure, |

**Fig. 7**    is a flow diagram for the behavior of a UE, according to an exemplary implementation for an improved measurement and reporting procedure,

**Fig. 8**    is a flow diagram for the behavior of a gNB, according to an exemplary implementation for an improved measurement and reporting procedure,

**Fig. 9**    is a signaling diagram of messages between the UE, the serving gNB and a neighbour gNB according to an improved measurement and reporting procedure,

**Fig. 10**    is a signaling diagram of messages between the UE, the serving gNB and a target gNB according to an improved conditional handover procedure,

**Fig. 11**    is a flow diagram for the behavior of a UE, according to an exemplary implementation for an improved conditional handover procedure,

**Fig. 12**    is a flow diagram for the behavior of a gNB, according to an exemplary implementation of the improved conditional handover procedure,

**Fig. 13 and 14**    illustrate respectively the 3-step and 4-step random access procedures,

**Fig. 15**    illustrates the DRX operation of a mobile terminal, and in particular the DRX opportunity and on-duration periods, according to a short and long DRX cycle;

**Fig. 16**    is a signaling diagram of messages exchanged between the UE, a serving gNB of the UE and a target gNB, for an exemplary implementation of an improved handover communication procedure,

**Fig. 17**    is a flow diagram for the behavior of a UE, according to an exemplary implementation of the improved handover communication procedure,

**Fig. 18 and 19**    are flow diagrams for the behavior of the serving gNB according to different implementations of the improved handover communication procedure,

**Fig. 20 and 21**    are flow diagrams for the behavior of the target gNB according to different implementations of the improved handover communication procedure, and

**Fig. 22**    is a flow diagram for the behavior of the UE according to an exemplary implementation of an improved HARQ operation procedure during a handover.

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

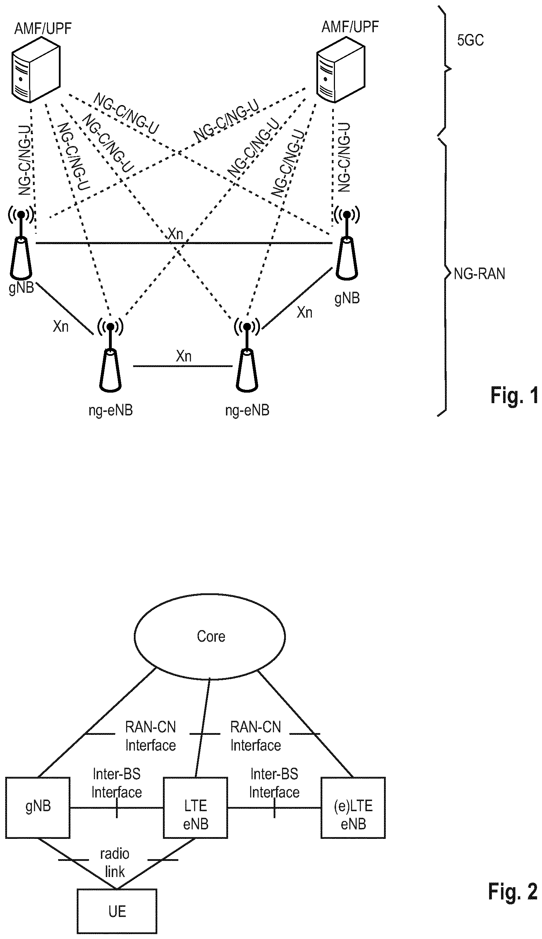

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.4.0, section 4).

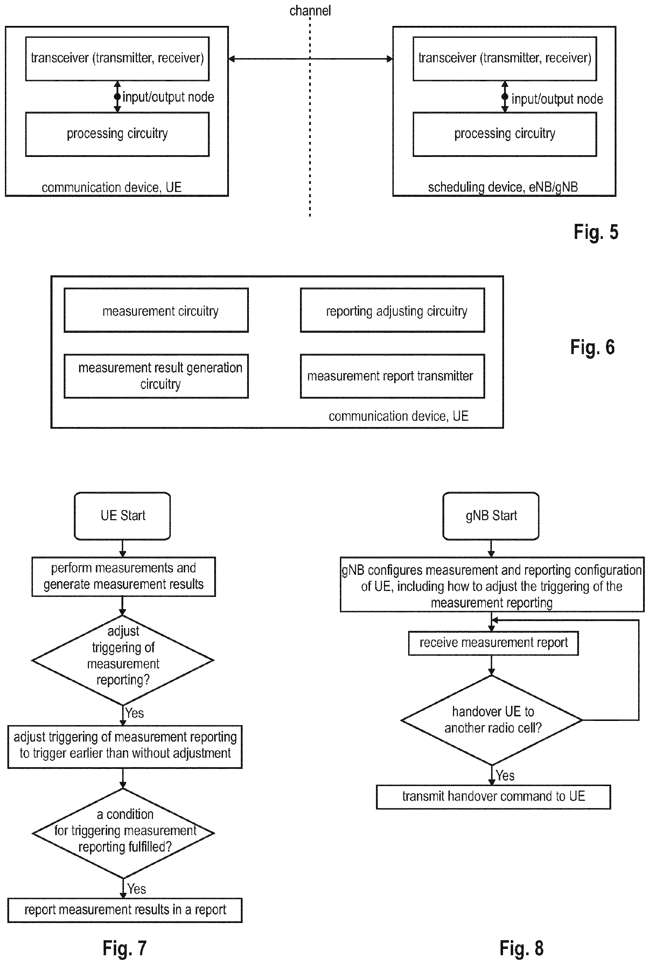

Various different deployment scenarios can be supported (see e.g. 3GPP TR 38.801 v14.0.0). For instance, a non-centralized deployment scenario (see e.g. section 5.2 of TR 38.801; a centralized deployment is illustrated in section 5.4) is presented therein, where base stations supporting the 5G NR can be deployed. **Fig. 2** illustrates an exemplary non-centralized deployment scenario (see e.g. Figure 5.2.-1 of said TR 38.801), while additionally illustrating an LTE eNB as well as a user equipment (UE) that is connected to both a gNB and an LTE eNB. The new eNB for NR 5G may be exemplarily called gNB. An eLTE eNB is the evolution of an eNB that supports connectivity to the EPC (Evolved Packet Core) and the NGC (Next Generation Core).

The user plane protocol stack for NR (see e.g. 3GPP TS 38.300 v15.4.0, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300 version 15.4.0). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

For the physical layer, the MAC layer uses services in the form of transport channels. A transport channel can be defined by how and with what characteristics the information is transmitted over the radio interface. The Random-Access Channel (RACH) is also defined as a transport channel handled by MAC, although it does not carry transport blocks. One of procedures supported by the MAC layer is the Random Access Procedure.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. One physical channel is the PRACH (Physical Random Access Channel) used for the random access.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.4.0).

*Reference signals*

As in LTE, several different types of reference signals (RS) are used for 5G NR (see 3GPP TS 38.211 v15.4.0 section 7.4.1). At least the following reference signals are available in 5G NR:

- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH,
- Tracking Reference Signal, usable for time tracking

Further, PBCH DMRS can be exemplarily seen as part of the SSB-reference signals (see 3GPP TS 38.215 v15.3.0 section 5.1.1 "SS reference signal received power (SS-RSRP)").

The main differences between reference signals in 5G NR communication systems and reference signals in LTE are that in 5G NR, there is no Cell-specific reference signal, that a new reference signal PTRS has been introduced for time/phase tracking, that DMRS has been introduced for both downlink and uplink channels, and that in NR, the reference signals are transmitted only when it is necessary.

As a DL-only signal, the CSI-RS, which the UE receives, is used to estimate the channel and report channel quality information back to the gNB. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction. The CSI-RS can be further characterized according to the following:

- It is used for DL CSI acquisition.
- Used for RSRP measurements during mobility and beam management
- Also used for frequency/time tracking, demodulation and UL reciprocity based pre-coding
- CSI-RS is configured specific to UE, but multiple users can also share the same resource
- 5G NR standard allows high level of flexibility in CSI-RS configurations, a resource can be configured with up to 32 ports.
- CSI-RS resource may start at any OFDM symbol of the slot and it usually occupies 1/2/4 OFDM symbols depending upon configured number of ports.
- CSI-RS can be periodic, semi-persistent or aperiodic (due to DCI triggering)

For time/frequency tracking, CSI-RS can either be periodic or aperiodic. It is transmitted in bursts of two or four symbols which are spread across one or two slots

*UE measurements in 5G NR*

An NR device can be configured to carry out different measurements, in some cases followed by a corresponding reporting of the results to the network.

In brief to provide the basic outline of measurements, the UE (NR device) can perform measurements e.g. based on reference signals (such as CSI-RS, SS Blocks) and obtains measurement results therefrom. These can be used by the UE internally or by other entities, such as the base station for mobility control, after having received some or all measurement results in a corresponding measurement report.

An exemplary and detailed implementation is presented in the following.

Measurements can be performed by a UE for connected-mode mobility and can be classified in at least three measurement types:

- Intra-frequency NR measurements,
- Inter-frequency NR measurements
- Inter-RAT measurements for E-UTRA

In general, the measurements can be configured by e.g. defining one or more measurement objects; a measurement object defines e.g. the carrier frequency to be monitored. Then, for each measurement object one or several reporting configurations can be defined, including reporting criteria such as event-triggered reporting, periodic reporting and event-triggered periodic reporting (see 3GPP TS 38.300 v15.3.1. section 9.1).

A report configuration indicates the quantity or set of quantities, for instance, different combinations of a channel quality indicator (CQI), a rank indicator (RI), a precoder-matrix indicator (PMI), jointly referred to as channel state information (CSI). Moreover, the report configuration may indicate reporting of received signal strength, more formally referred to as a reference signal received power (RSRP). RSRP has historically been a key quantity to measure and report as part of the higher-layer radio-resource management (RRM), and it is also for 5G NR. NR supports layer-1 reporting of RSRP, for instance, as part of the support for beam management, to thereby derive the beam quality. What is then reported can more specifically be referred to as L1-RSRP, reflecting the fact that the reporting does not include the more long-term ("layer 3") filtering applied for the higher-layer RSRP reporting. The L3-Filtering at RRC level may derive the cell quality from multiple beams, and may thus neutralizes the sudden change by considering the current input from the L1 filter and also the previous output from the L3 filter.

The set of downlink resources on which measurements should be carried out is also configured. For instance, for L1-RSRP for beam management can thus be based on measurements on either a set of SS (synchronization signal) blocks or a set of CSI-RS.

There are also situations when a device carries out measurements without any corresponding reporting to the network. One such exemplary case is when a UE carries out measurements for a receiver side downlink beamforming. The UE internally uses the measurements to select a suitable receiver beam. The network can configure the UEs accordingly by for instance specifying the reference signals to measure on, however indicating that no reporting is required.

The UE may measure multiple beams (at least one) of a cell, and the measurement results (e.g. power values) are averaged to derive a cell quality. In doing so, the UE can be configured to consider a subset of the detected beams. Filtering takes place at two different levels: at the physical layer (layer 1) to derive beam quality, and then at the RRC layer (layer 3) to derive cell quality from multiple beams. Cell quality from beam measurements is derived in the same way for the service cell(s) and for the non-serving cell(s).

Measurement reports are exemplarily characterized by one or more of the following:

- Measurement reports include the measurement identity of the associated measurement configuration that triggered the reporting;

- Cell and beam measurement quantities to be included in measurement reports are configured by the network;

- The number of non-serving cells to be reported can be limited through configuration by the network;

- Cells belonging to a blacklist configured by the network are not used in event evaluation and reporting, and conversely when a whitelist is configured by the network, only the cells belonging to the whitelist are used in event evaluation and reporting;

- Beam measurements to be included in measurement reports are configured by the network (beam identifier only, measurement result and beam identifier, or no beam reporting).

Intra-frequency neighbour (cell) measurements and inter-frequency neighbour (cell) measurements are exemplarily defined as follows:

- SSB based intra-frequency measurement: a measurement is defined as an SSB based intra-frequency measurement provided the center frequency of the SSB of the serving cell and the center frequency of the SSB of the neighbour cell are the same, and the subcarrier spacing of the two SSBs is also the same.

- SSB based inter-frequency measurement: a measurement is defined as an SSB based inter-frequency measurement provided the center frequency of the SSB of the serving cell and the center frequency of the SSB of the neighbour cell are different, or the subcarrier spacing of the two SSBs is different.
NOTE: for SSB based measurements, one measurement object corresponds to one SSB, and the UE considers different SSBs as different cells.

- CSI-RS based intra-frequency measurement: a measurement is defined as a CSI-RS based intra-frequency measurement provided the bandwidth of the CSI-RS resource on the neighbour cell configured for measurement is within the bandwidth of the CSI-RS resource on the serving cell configured for measurement, and the subcarrier spacing of the two CSI-RS resources is the same.

- CSI-RS based inter-frequency measurement: a measurement is defined as a CSI-RS based inter-frequency measurement provided the bandwidth of the CSI-RS resource on the neighbour cell configured for measurement is not within the bandwidth of the CSI-RS resource on the serving cell configured for measurement, or the subcarrier spacing of the two CSI-RS resources is different.

Whether a measurement is non-gap-assisted or gap-assisted depends on the capability of the UE, the active BWP of the UE and the current operating frequency. In non-gap-assisted scenarios, the UE shall be able to carry out such measurements without measurement gaps. In gap-assisted scenarios, the UE cannot be assumed to be able to carry out such measurements without measurement gaps.
Measurement reporting is defined in section 5.5.3 of 3GPP TS 38.331 v 15.3.0. The network may configure the UE to derive RSRP, RSRQ and SINR measurement results per cell. Measurement report triggering, including the different trigger events (see below overview), is defined in section 5.5.4 of 3GPP TS 38.331 v 15.4.0. Details on measurement reporting are provided in section 5.5.5 of 3GPP TS 38.331 v15.4.0.
Different events A1-A6, B1, B2 are defined, respectively including Leaving and Entering conditions, being associated with a time-to-trigger condition. This allows the UE to measure on its own and report the results according to the criteria defined for the events. An overview is given in the following:

- Event A1 (Serving becomes better than threshold)

  ○ Inequality A1-1 (Entering condition): $Ms - Hys > Thresh$

  ○ Inequality A1-2 (Leaving condition): $Ms + Hys < Thresh$

- Event A2 (Serving becomes worse than threshold)

  ○ Inequality A2-1 (Entering condition): $Ms + Hys < Thresh$

◦ Inequality A2-2 (Leaving condition): $Ms - Hys > Thresh$

- Event A3 (neighbour becomes offset better than SpCell)

◦ Inequality A3-1 (Entering condition): $Mn + Ofn + Ocn - Hys > Mp + Ofp + Ocp + Off$
◦ Inequality A3-2 (Leaving condition): $Mn + Ofn + Ocn + Hys < Mp + Ofp + Ocp + Off$

- Event A4 (neighbour becomes better than threshold)

◦ Inequality A4-1 (Entering condition): $Mn + Ofn + Ocn - Hys > Thresh$
◦ Inequality A4-2 (Leaving condition): $Mn + Ofn + Ocn + Hys < Thresh$

- Event A5 (SpCell becomes worse than threshold1 and neighbour/SCell becomes better than threshold2)

◦ Inequality A5-1 (Entering condition 1): $Mp + Hys < Thresh1$
◦ Inequality A5-2 (Entering condition 2): $Mn + Ofn + Ocn - Hys > Thresh2$
◦ Inequality A5-3 (Leaving condition 1): $Mp - Hys > Thresh1$
◦ Inequality A5-4 (Leaving condition 2): $Mn + Ofn + Ocn + Hys < Thresh2$

- Event A6 (Neighbour becomes offset better than SCell)

◦ Inequality A6-1 (Entering condition): $Mn + Ocn - Hys > Ms + Ocs + Off$
◦ Inequality A6-2 (Leaving condition): $Mn + Ocn + Hys < Ms + Ocs + Off$

- Event B1 (Inter RAT neighbour becomes better than threshold)

◦ Inequality B1-1 (Entering condition): Mn + Ofn + Ocn - Hys > Thresh
◦ Inequality B1-2 (Leaving condition): Mn + Ofn + Ocn + Hys < Thresh

- Event B2 (PCell becomes worse than threshold1 and inter RAT neighbour becomes better than threshold2)

◦ Inequality B2-1 (Entering condition 1): Mp + Hys < Thresh1
◦ Inequality B2-2 (Entering condition 2): Mn + Ofn + Ocn - Hys > Thresh2
◦ Inequality B2-3 (Leaving condition 1): Mp - Hys > Thresh1
◦ Inequality B2-4 (Leaving condition 2): Mn + Ofn + Ocn + Hys < Thresh2

The above-indicated parameters are generally the following:

- *Ms* is the measurement result of the serving cell, not taking into account any offsets.
- *Mn* is the measurement result of the neighbouring cell, not taking into account any offsets.
- *Ofn* is the measurement object specific offset of the reference signal of the neighbour cell (i.e. offsetMO as defined within measObjectNR corresponding to the neighbour cell).
- *Ocn* is the cell specific offset of the neighbour cell (i.e. cellIndividualOffset as defined within measObjectNR corresponding to the frequency of the neighbour cell), and set to zero if not configured for the neighbour cell.
- *Mp* is the measurement result of the SpCell, not taking into account any offsets.
- *Ofp* is the measurement object specific offset of the SpCell (i.e. offsetMO as defined within measObjectNR corresponding to the SpCell).
- *Ocp* is the cell specific offset of the SpCell (i.e. cellIndividualOffset as defined within measObjectNR corresponding to the SpCell), and is set to zero if not configured for the SpCell.
- *Off* is the offset parameter for this event (i.e. a3-Offset as defined within reportConfigNR for this event).
- *Hys* is the hysteresis parameter for this event (i.e. hysteresis as defined within reportConfigNR for this event).
- *Thresh* is the threshold parameter for this event (i.e. a1-Threshold as defined within reportConfigNR for this event).
- *Thresh1* is the threshold parameter for this event (i.e. a5-Threshold1 as defined within reportConfigNR for this event).
- *Thresh2* is the threshold parameter for this event (i.e. a5-Threshold2 as defined within reportConfigNR for this event).
- *Mn, Mp, Ms* is expressed in dBm in case of RSRP, or in dB in case of RSRQ and RS-SINR.
- *Ofn, Ocn, Ofp, Ocp, Hys, Off* are expressed in dB.

At least the following mechanisms are based on the measurement results obtained by the UE:

- handover decisions by the gNB based on the measurement results (received via measurement reports)
- triggering of measurement reporting
- radio link failure indication

*Non-Terrestrial Networks, NTN*

Satellites will continue to be the most effective means for reaching areas beyond terrestrial coverage as well as to passengers in trains, aircrafts & vessels. Therefore, including satellites as an integral part of the 5G ecosystem adds resilience. The satellite industry has participated in various committees, including in 3GPP, EC and ITU-T to ensure that satellite systems are integrated as an intrinsic part of the 5G ecosystem. The targets are 1) to support highly available and reliable connectivity using satellites for use cases such as ubiquitous coverage, disaster relief, public safety requirements, emergency response, remote sensor connectivity, broadcast service, etc., 2) to support an air-interface with one-way latency of up to 275 ms when satellite connection is involved, and 3) to support seamless mobility between terrestrial and satellite based networks with widely varying latencies. The roles and benefits of satellites in 5G have been studied in 3GPP Release 14, leading to the specific requirement to support satellite access.

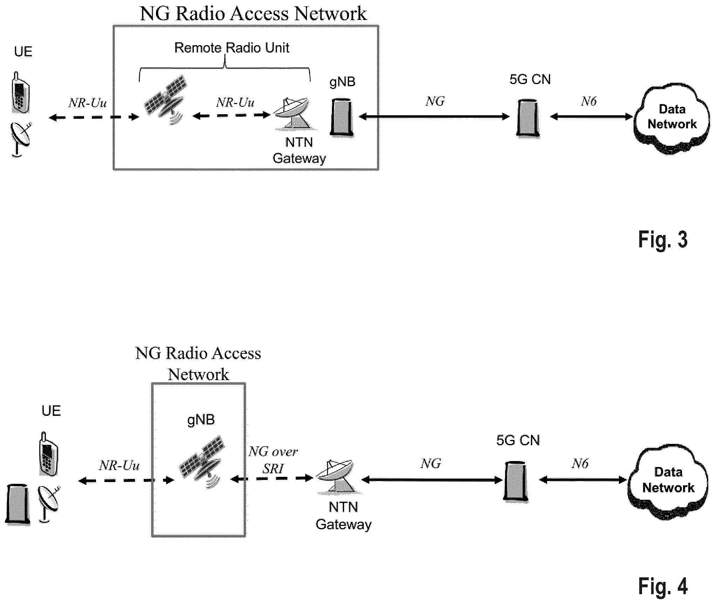

**Fig. 3** illustrates an exemplary NG RAN architecture based on a transparent satellite. According to one exemplary implementation (see TR 38.821 v0.3.0 section 5.1), the satellite payload implements frequency conversion and a Radio Frequency amplifier in both uplink and downlink direction. It corresponds to an analogue RF repeater. Hence, the satellite repeats the NR-Uu radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. **Fig. 4** illustrates an exemplary NG RAN architecture based on a regenerative satellite. According to one exemplary implementation (see TR 38.321 v0.3.0 section 5.2), the NG-RAN logical architecture as described in TS 38.401 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between NTN GW and satellite.

The satellite payload also provides Inter-Satellite Links (ISL) between satellites. ISL (Inter-Satellite Links) is a transport link between satellites.

There is ongoing discussion for addressing mobility for NTN. It is assumed that satellite beams, satellites or satellite cells need not be visible from UE perspective in NTN, which however does not need to preclude that the type of network (e.g. NTN vs. terrestrial) is differentiated at the PLMN (Public Land Mobile Network) level. Further, it has been agreed that Rel-15 design/definition will be used as the baseline for NTN, which implies the NR RRM measurement model used in Rel-15 will also be the baseline for the NTN RRM measurement model.

The inventors have recognized that for non-terrestrial communication, the round trip delay (RTD) can be much larger than in terrestrial communication. For instance, the maximum RTD in NTN is 541.1ms for GEO (Geostationary Earth Orbiting, e.g. at 35786 km altitude) and 25.76/41.76 ms for LEO (Low Earth Orbiting, e.g. at 600/1200 km altitude). In terrestrial communication the RTD can be e.g. up to 5ms.

Long RTD can result in a high handover failure rate, because the network makes handover decisions based on measurements that are already out-of-date and thus could be inaccurate. For instance, handover failures might include the handover-too-late case (other cases are e.g. the handover-to-wrong cell case). Furthermore, the long RTD in the message exchange also results in that the NTN handover takes a longer time, which might result in a longer service interruption for the UE during the handover from one NTN-network to another NTN-network.

Consequently, the inventors have identified the possibility to improve the measurement reporting and/or handover procedures so as to facilitate avoiding one or more of the above-discussed disadvantages. The improved measurement reporting and handover procedures can then be applied to scenarios such as the NTN scenarios where high latency is present. However, the NTN scenario is not the only scenario where the improved procedures can be implemented, but also other communication scenarios with a high RTD and/or rapid channel variation environment can benefit from the improved procedures, such as the NR Unlicensed scenario where the channel quality changes fast.

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Fig. 5 illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

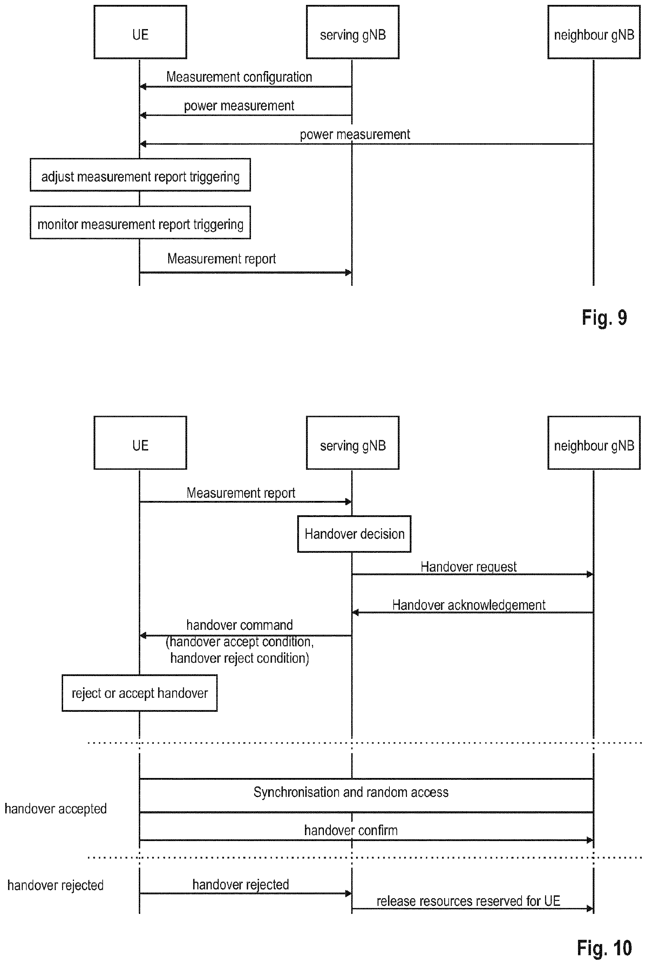

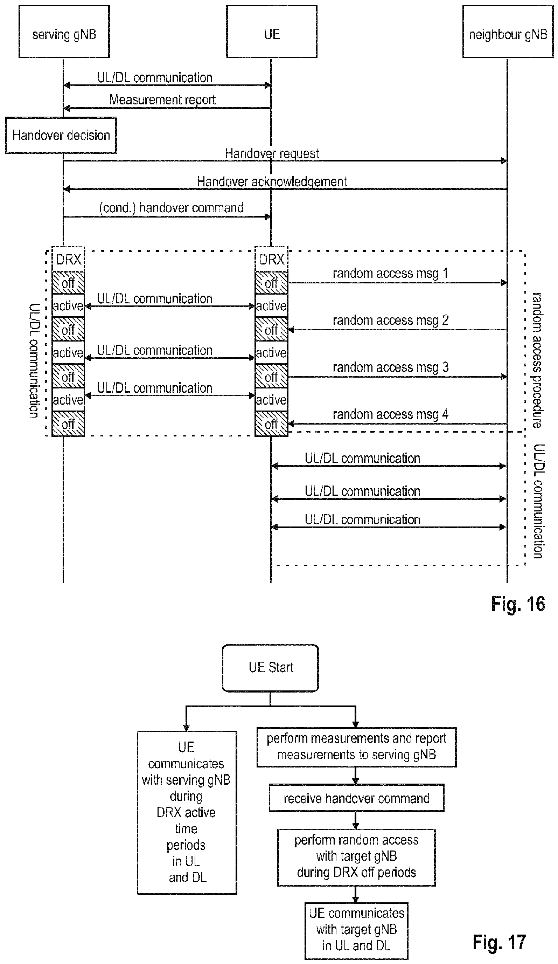

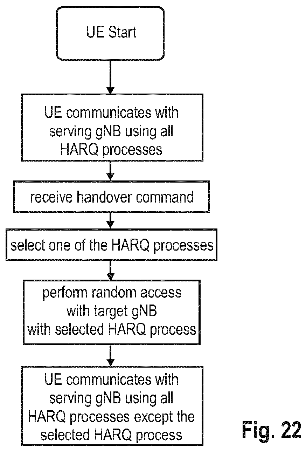

An improved measurement and reporting procedure will be described with regard to **Fig. 6 to 9.** Furthermore, an improved conditional handover procedure will be described with regard to **Fig. 10 to 12.** Moreover, an improved handover communication procedure will be described with regard to **Fig.16-21.** Finally, an improved HARQ procedure will be described with regard to **Fig. 22.**

The solutions offered in the following will be described mainly in connection with the 5G NR NTN scenarios. As explained above, the NTN (Non-Terrestrial Network) environment involves that a UE is communicating via a satellite with a gNB, where the gNB can be e.g. in the satellite (see Fig. 4) or at the NTN gateway (see Fig. 3), but could also be located at other locations, such as outside the NTN gateway. Nevertheless, the scope of the embodiment should not be narrowed to merely those NTN scenarios, but also encompasses other scenarios such as NR Unlicensed.

UE mobility in such scenarios involves that the UE moves between the coverage of various satellites, e.g. a UE during a flight. UE mobility is typically controlled by the serving gNB, but assisted by the UE, which provides results of power-related measurements to the serving gNB. The serving gNB may then decide whether or not it is necessary or advantageous to hand over the UE to another radio cell, and in the positive case, to initiate a suitable handover procedure.

In more detail, it is assumed that the UE performs power-related measurements, e.g. on a regular basis. For instance, power-related measurements may include RSRP (Reference Signals Received Power), RSRQ (Reference Signal Received Quality), RSSI (Received Signal Strength Indicator,) SINR (signal-to-interference-plus-noise ratio), or other suitable types of measurement can be used in said respect by the UE. Typically, the power-related measurements can be performed e.g. on reference signals, such as the CSI-RS or SSB explained above.

Whether and how the UE performs the power-related measurements can be configured at least in part by its serving gNB. This may further involve configuration as to whether, how and when the UE is supposed to report results of the measurements to its serving base station (e.g. to assist in the handover decisions).

One exemplary implementation of how to configure the measurement and reporting functions in the UE is explained above (see discussion of UE measurements in 5G) and for instance involves the definition of one or more of measurement object(s), reporting configurations, and reporting criteria. For instance, the event-triggered reporting of the measurement results could be defined, including reporting trigger events similar or the same as those explained above (e.g. A1-A6, B1, B2). The trigger events, particularly the conditions for the trigger events, can be handover related, e.g. in that the report trigger condition is fulfilled when a handover of the UE from its current serving radio cell to another radio cell could be decided by the serving gNB (for instance, Event A2: "Serving becomes worse than threshold"; A3: "neighbour becomes offset better than SpCell"; A4: "neighbour becomes better than threshold").

Moreover, it is assumed that the UE can perform measurements on various radio carriers (alternatively termed access links or frequency bands), with the same or different radio frequencies. For instance, the UE measurements are performed on its serving radio carrier (of its serving radio cell controlled by the serving gNB) and one or more neighbour radio carriers (of other radio cells controlled by neighbour gNBs).

The measurement and reporting configuration is intended to be used by the UE for mobility between non-terrestrial networks and between terrestrial networks. According to the present solutions, the measurement and reporting configuration is differentiated dependent on whether mobility is between terrestrial networks or between non-terrestrial networks (more details below).

In the following, it will be exemplarily assumed that the UE is connected to its serving gNB via a satellite and performs measurements on its radio carrier with the satellite as well as one or more radio carriers to other neighbouring satellites. These UE measurements can then be used by the serving gNB, serving the UE, to control mobility of the UE, including whether to handover the UE from the serving satellite to another satellite. The handover procedure initiated by the serving gNB can be e.g. a handover procedure already known from the prior art or may be the improved conditional handover procedure discussed later in more detail (see Fig. 10-12) where the final decision of whether to handover or not rests with the UE.

**Fig. 6** illustrates a simplified and exemplary UE structure according to the present solution of the improved measurement and reporting procedure and can be implemented based on the general UE structure explained in connection with Fig. 5 above. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent therefrom, the UE may include a measurement circuitry, a measurement result generation circuitry, reporting adjusting circuitry, and a measurement report transmitter as will be explained in the following.

In the present case as will become apparent from the below disclosure, the processing circuitry can thus be exemplarily configured to at least partly perform one or more of performing measurements and generating measurement results therefrom, determining whether or not to adjust at least one of the measurement results and the report trigger conditions, adjusting at least one of the measurement results and the report trigger conditions, and determining whether or not the report trigger conditions are fulfilled.

The transmitter can in turn be configured to be able to at least partly perform the transmitting of the measurement report, including the measurement results.

**Fig. 7** is a sequence diagram for an exemplary UE behavior according to this improved measurement and reporting procedure. As apparent therefrom, the UE performs power-related measurements on at least one radio carrier, and therefrom generates measurement results. The power-related measurements are for instance performed on one or more of the serving radio carrier of the UE (in this particular exemplary scenario the radio carrier connecting the UE with the satellite), the radio carriers connecting the UE to neighbouring satellites, and radio carriers connecting the UE to terrestrial networks (such as 5G or LTE antenna).

As mentioned above, the UE reports the measurement results to its serving base station for instance depending on whether or not particular report trigger conditions are fulfilled. When one or more of the report trigger conditions are fulfilled, the UE compiles a measurement report with the obtained measurement results and transmits the measurement report to its serving gNB.

According to this improved measurement and reporting procedure, before determining whether report trigger conditions are fulfilled or not, the UE determines whether or not to first adjust the measurement reporting procedure so as to trigger measurement report transmission earlier than without the adjustment. This additional step of adjusting the measurement reporting procedure is done so as to take into account that mobility between satellites is different from mobility e.g. between terrestrial networks due to the long round-trip delay involved in the communication between the UE and the satellites. As explained before, the inventors have identified the disadvantages connected with the long round-trip delay for the measurement procedure and thus also for the handover procedure. By triggering the measurement reporting earlier, the handover-too-late failure events can sometimes be avoided or mitigated. Correspondingly, the decision by the UE to additionally adjust the measurement reporting procedure can be taken when the radio carrier which is measured and which measurement results are to be reported involves a long round-trip delay, which is e.g. more than 10 ms, such as for a non-terrestrial network. Alternatively, the UE determinates whether or not to adjust the measurement reporting procedure according to an instruction given by the serving gNB. One option is that the instruction is given by the serving gNB to the UE through the measurement object (MO) configuration for the UE measurements.

Continuing with the sequence of the UE behavior illustrated **in Fig. 7**, it is assumed that the additional adjustment is to be performed by the UE. As mentioned before, the adjustment is such that the measurement report is triggered earlier than a corresponding measurement report triggered without the adjustment. In other words, the report trigger condition is fulfilled earlier, and the measurement report is consequently transmitted earlier in time to the serving base station.

This advancing of the measurement reporting in time can be achieved in several ways, e.g. by adjusting the measurement results and/or the report trigger conditions, as will be explained and exemplified later in more detail.

After adjusting, the UE monitors whether the measurement results fulfill one of the report trigger conditions (the measurement results and/or the report trigger conditions having been adjusted). Subsequently, in case the measurement report is triggered, the UE proceeds to generate and transmit the measurement report to the serving gNB, including some or all of the generated measurement results. The measurement report e.g. includes the non-adjusted measurement results, thereby providing the accurate measurements to the gNB. On the other hand, instead or additionally to the non-adjusted measurement results, the UE may also include the adjusted measurement results into the measurement report to be transmitted to the serving gNB. This would allow the serving gNB to also derive the previous measurement results, that had not been transmitted to the serving gNB, such that the serving gNB has more information to determine whether to initiate a handover procedure or not.

**Fig. 8** illustrates an exemplary gNB behavior in connection with the just described improved measurement and reporting procedure. In the exemplary gNB behavior, the gNB is responsible for configuring not only the measurement and reporting configuration for the UE, but also whether and how the UE has to adjust the triggering of the measurement reporting so as to achieve an earlier report of the measurement results as already mentioned above in connection with Fig. 7.

The gNB receives the measurement report with the measurement results from the UE, and on that basis, can take a decision whether or not to initiate a handover procedure for the UE to hand over the UE to another radio cell (e.g. another satellite). In the positive case, the gNB transmit a corresponding handover command to the UE.

The above-discussed procedure has the advantage that handover-too-late failure events can be avoided or mitigated because the additional adjusting of the measurement reporting advances the trigger in time such that the measurement report is transmitted earlier to the serving gNB which can decide earlier on the handover. Additionally, the adjusting solution is simple because it does need to rely on other information, such as the UE location or satellite location (ephemeris of satellite).

An exemplary and simplified sequence of the improved measurement and reporting procedure is illustrated in **Fig. 9.** As illustrated, the serving gNB of the UE provides the measurement configuration to the UE, which the UE so as to perform measurements on its serving radio carrier and other neighbour radio carriers (in Fig. 9 only one neighbour is illustrated for ease of illustration). The additional adjusting of the measurement reporting procedure is exemplarily illustrated to occur after the power measurements, but could also occur in parallel or before. The sequence of Fig. 9 ends with the transmission of the measurement report to the serving gNB.

In the following, some different exemplary implementations will be described of how to adjust the measurement reporting to be triggered earlier than without the adjustment. The adjustment is applied to the measurement results as such, before being then used to determine whether the report trigger condition is fulfilled, or the adjustment can be applied to the report trigger conditions. Depending on the measurement result and/or the report trigger condition, the adjustment can be different in order to achieve the early trigger.

According to one exemplary implementation, one or more suitable power offsets may be introduced so as to achieve that the report trigger condition is fulfilled earlier. The power offset can be applied to the measurement result as such, or the power offset may be applied to the report trigger condition. Again, the amount of the offset and also whether it is negative or positive may depend on the measurement result and/or the report trigger condition.

For illustrative reasons, it is exemplarily assumed that some or all of the report trigger conditions already defined for 5G (see above explanations in said respect) are used by the UE to determine whether or not to transmit the measurement results to its serving gNB.

The entering condition for Event A1 (Serving becomes better than threshold) so as to start transmitting the measurement results to the serving gNB is

$$Ms - Hys > Thresh$$

When applying an adjustment to this report trigger condition, this can be achieved by incorporating the offset (exemplarily termed NTN-offset) as follows:

$$Ms + NTN\text{-}offset - Hys > Thresh$$

As apparent from the above, by introducing a positive offset, the threshold ("Thresh") is reached earlier.

The entering condition for Event A2 (Serving becomes worse than threshold) is

$$Ms + Hys < Thresh$$

When applying an adjustment to this report trigger condition, this can be achieved by incorporating the offset as follows:

$$Ms - NTN\text{-}offset + Hys < Thresh$$

As apparent from the above adjusted trigger condition, by introducing the negative offset, the threshold is reached earlier (<) than without.

The entering condition for Event A3 (neighbour becomes offset better than SpCell) is

$$Mn + Ofn + Ocn - Hys > Mp + Ofp + Ocp + Off$$

When applying an adjustment to this report trigger condition, this can be achieved by incorporating one or two offsets as follow:

$$Mn + NTN\text{-}neighbour\text{-}offset + Ofn + Ocn - Hys > Mp - NTN\text{-}serving\text{-}offset + Ofp + Ocp + Off$$

According to one specific implementation, an offset (here exemplary NTN-serving-offset) is defined for the trigger condition part referring to the serving cell and another offset (here exemplary NTN-neighbour-offset) is defined for the trigger condition part referring to the neighbour cell. Consequently, when determining the same trigger condition with respect to the serving cell and other neighbouring cells, the same NTN-serving-offset and the same NTN-neighbour-offset can be used again. This simplifies the adjustment, because for each report trigger condition, at most, two different offsets are defined, namely one referring to the serving cell and one referring to the neighbour cell.

The entering condition for Event A4 (neighbour becomes better than threshold) is

$$Mn + Ofn + Ocn - Hys > Thresh$$

When applying an adjustment to this report trigger condition, this can be achieved by incorporating the offset as follow:

$$Mn + NTN\text{-}offset + Ofn + Ocn - Hys > Thresh$$

As apparent therefrom, by forcefully increasing the left-hand side measurement results for the neighbour cell, the threshold is reached earlier.

In summary, adjusting the measurement report triggering depends on the particular trigger condition, following the premise that the condition is to be reached earlier.

The particular values can be configured by the network (e.g. the gNB), e.g. together with the remaining configuration of the UE measurements (e.g. measurement objects, reporting criteria etc.).

When the NTN-specific offsets are set to 0, the report trigger conditions are equally applicable to other scenarios.

The values of the different offsets can be determined by the gNB in different manners balancing out the impact of the offset on the respective trigger condition, e.g. so that other handover failures (e.g. the handover too early) are avoided or minimized. According to one exemplary implementation, the gNB determines the offset values depending on the round trip delay experienced by the UE with the serving gNB.

Moreover, it is also possible for the gNB to change the adjustment (e.g. offsets) during operation so as to adapt the improved measurement reporting procedure, e.g. when determining that too many handover failures are caused or too many measurement reports are triggered. For example, reconfiguration or canceling of the measurement reporting adjustment can be done by using messages from the RRC protocol, e.g. the RRC Reconfiguration message.

According to another exemplary implementation of how to implement the adjustment of the measurement reporting, instead of using a network-configured adjustment, the adjustment is determined by the UE itself. The above mentioned offsets (e.g. NTN-offset, NTN-serving-offset, NTN-neighbour-offset) are determined by the UE. For instance, the offset is determined for each measurement result, e.g. by determining the difference between the current measurement result and the previously determined measurement result (the difference being termed exemplary $\Delta$meas). In other words, the change of the measurement is doubled and thus leads to a triggering of the measurement reporting that is earlier than without the offset.

For instance, taking again for illustrative purposes, the above discussed 5G measurement events A1, A2, A3.

The entering condition for Event A1 (Serving becomes better than threshold) so as to start transmitting the measurement results to the serving gNB is

$$Ms - Hys > Thresh$$

When applying an adjustment to this report trigger condition, this can be achieved by incorporating the measurement difference $\Delta$meas as follows:

$$Ms + \Delta meas - Hys > Thresh$$

As apparent from the above, by amplifying an increase in the measurement result, the threshold ("Thresh") is reached earlier.

The entering condition for Event A2 (Serving becomes worse than threshold) is

$$Ms + Hys < Thresh$$

When applying an adjustment to this report trigger condition, this can be achieved by incorporating the measurement difference $\Delta$meas as follows:

$$Ms + \Delta meas + Hys < Thresh$$

As apparent from the above adjusted trigger condition, by increasing the drop of the measurement result, the threshold is reached earlier (<) than without.

The entering condition for Event A3 (neighbour becomes offset better than SpCell) is

$$Mn + Ofn + Ocn - Hys > Mp + Ofp + Ocp + Off$$

When applying an adjustment to this report trigger condition, this can be achieved by incorporating the measurement difference $\Delta$meas as follows:

$$Mn + \Delta meas\_n + Ofn + Ocn - Hys > Mp + \Delta meas\_p + Ofp + Ocp + Off$$

As apparent therefrom, the changes (drop or increase in measured power) are artificially augmented by introducing the offset $\Delta$meas for the serving respectively the neighbour measurements. As a result, the trigger condition is fulfilled earlier than without the offsets.

Calculating the measurement differences as the offsets, rather than following the network-configured offset values, avoids the need for the gNB to configure the offsets for the UE and possibly keep adjusting the offsets so as to maintain good handover performance. Furthermore, the adjustment can be more precise, because it is based on the UE's previous measurements rather than an artificial value set by the serving gNB. On the other hand, the network has less control over how the measurement reporting is adjusted.

As discussed above, the gNB will eventually decide to initiate a handover procedure with the UE, after having received the measurement report with the measurement results. As one option, the handover procedure can be a standard handover procedure, as already defined e.g. in the 3GPP standards (see TS38.331 v15.4.0).

On the other hand, in the following, an improved conditional handover procedure will be described with reference to **Fig. 10-12** that can be employed instead by the gNBs and the UE. Conditional handovers in general shift the final decision as to whether to perform the handover from the serving gNB to the UE. This is achieved e.g. by additionally providing a condition to the UE (e.g. with the handover command message), which the UE can use to determine whether and when to execute the instructed handover. A conditional handover facilitates the advantage that the handover latency can be reduced, because the handover can be prepared by the serving gNB and then executed on time by the UE when needed. At the point of executing the handover, it is avoided the need to again transmit a further measurement report to the serving gNB to trigger the handover procedure. However, the handover was prepared in the potential target cell, such that the target gNB needs to reserve resources (e.g. dedicated PRACH resources for the random access, C-RNT) for the UE for a long time, which might not be even used in the end (e.g. when the UE does not execute the handover).

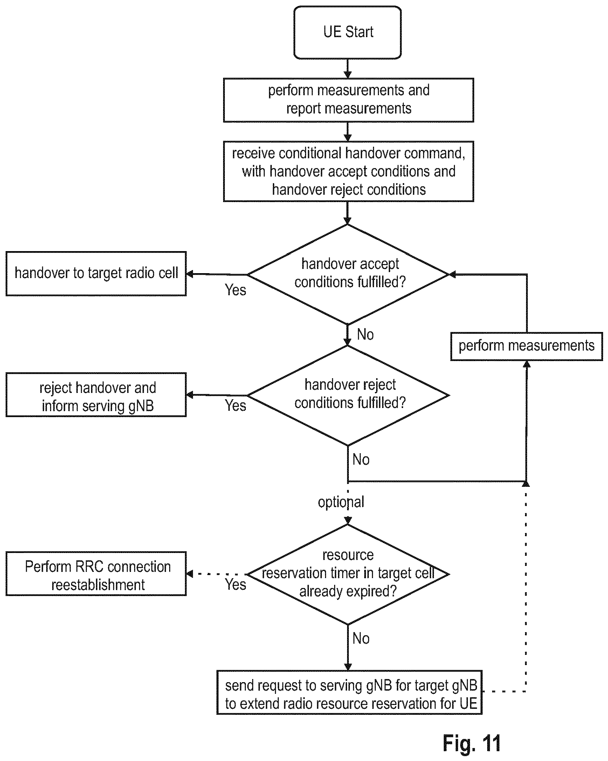

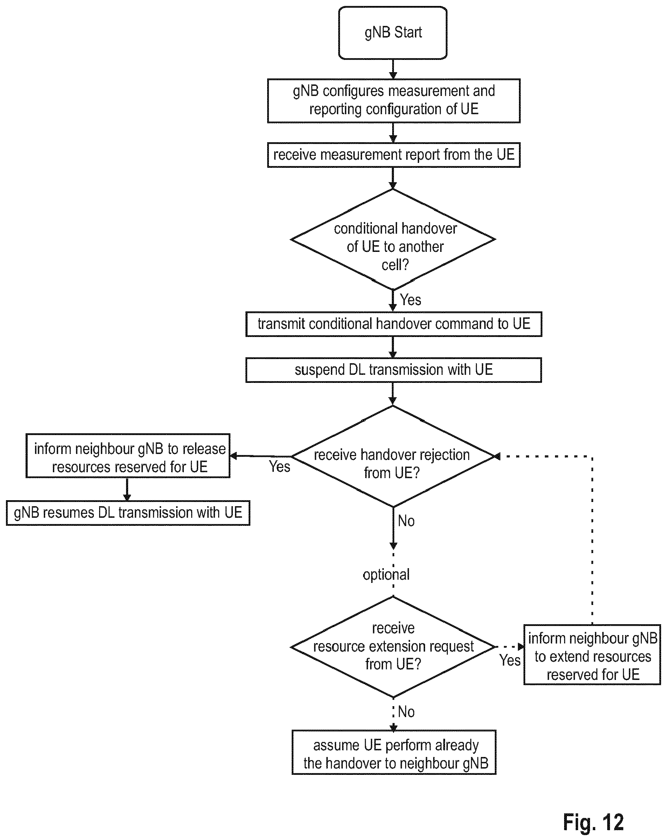

The improved conditional handover procedure, discussed in connection with Fig. 10-12, tries to mitigate these problems and revolves around the idea of additionally providing one or more handover rejecting conditions to the UE, which the UE monitors so as to abort the possible handover at an early time, rather than awaiting e.g. a time out. This will be explained in more detail below. **Fig. 10** illustrates an exemplary message exchange between the UE, the serving gNB and a neighbour gNB as the possible target of the handover. **Fig. 11** is an exemplary sequence diagram of the UE behavior, while **Fig. 12** illustrates an exemplary sequence diagram of the behavior of a gNB that takes the role of the serving gNB of the UE.

As discussed before, handover decisions are typically taken by the serving gNB, assisted by the UE by providing measurement reports on the serving radio carrier and possibly other neighbouring radio carriers. Correspondingly, the first message illustrated in the message exchange diagram of **Fig. 10** is the measurement report transmitted by the UE to its serving gNB. The measurement report can be generated according to the improved measurement reporting procedure as discussed above with reference to Fig. 6 to 9 (e.g. the measurement report is triggered earlier due to the additional adjustment of the measurement report triggering). On the other hand, the measurement report can also be a "normal" measurement report that is triggered without the UE having adjusted the triggering of the measurement reporting function.

Based on the received measurement report (and the measurement results included therein), the serving gNB can decide that a handover to another radio cell (e.g. another satellite) could be beneficial for the UE and thus starts a suitable handover procedure with a target gNB (neighbour gNB) and the UE.

It is assumed herewith that the serving gNB decides to perform a conditional handover for the UE. The gNB decision in favor of a conditional handover can be based on various different criteria. For instance, the serving gNB can decide for a condition handover in case it configured the UE before to perform the improved measurement and reporting procedure as explained above in connection with Fig. 6 to 10. In more detail, the serving gNB typically configures the UE as to how to perform the power-related measurements as well as the reporting of the measurement results, which might also include whether and how the UE shall adjust the measurement report triggering (e.g. the NTN-related offset values etc.). The early reporting of the measurement results, achieved by the above-discussed improved measurement and reporting procedure, however could theoretically lead to an increase of the handover-too-early cases. This disadvantage could be mitigated by performing the conditional handover decision, because the UE could thus execute the instructed handover to a target cell when the handover accept condition is fulfilled and not too early.

In addition or alternatively, the serving gNB may also decide to perform a conditional handover, rather than a normal handover, based on the round-trip-delay incurred in communicating with the UE. For instance, if the round trip delay exceeds a particular threshold (e.g. 10ms), it might be beneficial for the final handover decision to rest with the UE, so as to avoid wrong handover decisions resulting from a long round trip delay.

A further additional or alternative criterion for deciding to make handover conditional is the rate of handover failures. For instance, it is assumed that non-conditional handover procedures were conducted so far by the serving gNB with the UEs in its radio cell. Then however, in case the handover failure rate (e.g. the handover-too-early failure rate) is too high, the serving gNB may determine that making the handover conditional on a suitable condition for the UE to finally decide is beneficial and could reduce the handover failure rate.

A still further additional or alternative criterion for deciding to make the handover conditional is based on positions of the satellite and/or the UE. For instance, even if the serving gNB would, from the measurement report, decide that there is no need for a conditional handover, the gNB can still trigger the conditional handover if the satellite position and/or the UE position indicate that the UE is located close to the cell edge.

With reference to Fig. 10 again, it is assumed that the serving gNB decides for a conditional handover, e.g. according to one or more of the above-mentioned criteria. The serving gNB prepares the handover in the target cell (see handover request and handover acknowledgment in Fig. 10) and transmits a handover command message to the UE. As exemplarily illustrated in Fig. 10, the handover procedure may be initiated by e.g. requesting the handover and awaiting the acknowledgement of the handover from the neighbour cell, e.g. so as to ascertain that the neighbour gNB has the capacity to accept a further UE and so as to allow the neighbour gNB to reserve resources for the UE to be handed over. After receiving the handover acknowledgement from the neighbour gNB, the serving gNB proceeds with the handover procedure and transmits a corresponding handover command message to the UE.

As usual, the handover command message may include the id and additional information to identify and connect to the target cell. Furthermore, the handover command message includes one or more handover accept conditions and handover reject conditions. The handover accept condition is checked by the UE in order to determine whether and when to execute the handover. In case the handover accept condition is fulfilled, the UE executes the handover. On the other hand, the handover reject condition is checked by the UE in order to determine whether to reject the handover instruction. In case the handover reject condition is fulfilled, the UE immediately rejects the handover and may provide corresponding information on the rejection to its serving gNB (which could be used by the serving gNB to indicate to the target gNB to release any resources previously reserved for the UE handover). Fig. 10 illustrates both the handover accept case and the handover reject case.

The handover accept condition and handover reject condition can be determined by the serving gNB, depending on the particular handover scenario. According to one optional implementation, the handover accept and reject conditions may be inter-related, e.g. such that they are exclusive and allow the UE to unequivocally decide whether to decide or reject the handover. This is beneficial so as to force an immediate decision on the handover, and thus allows to minimize the resource reservation time at the target cell. Further assuming that the UE and serving gNB interrupt communication during a handover, forcing an immediate decision by the UE on the instructed handover may thus also facilitate minimizing the communication interruption time, because the UE and serving gNB can immediately resume UL/DL communication. On the other hand, the handover accept and reject conditions need not be complementing each other completely. Thus, for instance there may be measurement cases where neither the handover accept condition nor the handover reject condition are fulfilled at the same time. There is gap between the accept and reject conditions.

For example, a possible handover reject condition is "if serving cell is better than the target cell for more than x DB for at least y ms", where the parameter values x and y can be set appropriately by the gNB (e.g. x could be 5 dB, and y could be 50 ms). A handover accept condition could be e.g. "if target cell is better than the serving cell for more than x DB for at least y ms", where the parameter values x and y can be set appropriately by the gNB (e.g. x could be 8 dB, and y could be 30 ms).

Information on the rejection of the handover can be transmitted to the serving gNB of the UE in several different manners, and may for instance depend on whether uplink data is still to be transmitted or not.

According to one exemplary solution, in case there is no UL traffic, the handover reject information can be transmitted as part of a RRC (Radio Resource Control protocol) message, such as the RRCReconficuationComplete message or another, possibly new, RRC message. In addition or alternatively, the handover reject information may be implicitly provided to the serving gNB, by e.g. transmitting a measurement report to the serving gNB, in reply to the conditional handover command message. The serving gNB may implicitly derive therefrom that the UE rejected the handover.

According to other exemplary solutions, in case there is UL traffic, the handover reject information can be included in a MAC (Medium Access Control) Control Element (CE) with the UL traffic data.

In any case, the serving gNB is thus provided with information that the handover was rejected by the UE.

In one optional implementation, when rejecting a handover, the UE may be configured to refrain from sending further measurement reports to the serving gNB for a particular period of time. This has the advantage that a further (conditional) handover is not triggered shortly after the handover is rejected. For instance, the UE may use a prohibit timer, that is started upon rejecting the handover. The timer may be configured by the network, e.g. by the serving gNB when configuring the measurement and reporting function in the UE.

According to a further optional implementation, a mechanism is incorporated so as to extend the resource reservation at the target radio cell, e.g. so as to avoid cases where the resource reservation in the target cell is canceled too early. In more detail, resource reservation in the target cell may only be upheld by the target gNB for a particular period of time (e.g. controlled by a suitable timer, e.g. T304 in some 5G implementations), which might however expire before the UE takes a decision of whether to accept or reject the handover. This problem may be exacerbated in cases long round-trip-delays are involved and where the handover accept and reject conditions are defined in a way such that the UE does not immediately decide to reject or accept the handover.

In such scenarios, it is beneficial that the UE, when neither the handover accept condition nor the handover reject condition are fulfilled, instructs the serving gNB to extend the resource reservation in the target cell. As illustrated in Fig. 11, the UE may optionally check whether the corresponding resource reservation timer already expired. If already expired, then handover to the target gNB is no longer possible as intended, and the UE connects to either its old serving gNB or another gNB (this e.g. involves performing a RRC connection re-establishment). The instruction can be transmitted similar or the same as already discussed with regard on how to convey the rejection information to the serving gNB (see corresponding description for more details). The serving gNB in turn may contact the target gNB to extend the resource reservation, when it receives such a resource reservation extension request. The serving gNB may optionally assume that the handover is being performed as intended when it does not receive such a resource reservation extension request (see Fig. 12).

According to further solutions, the handover procedure is further improved by allowing the UE to continue communicating with its serving gNB, while at the same time executing the handover procedure with the target cell. In prior art solutions, the UL/DL communication is interrupted when the UE initiates the random access procedure with the target cell as part of the handover execution. This however leads to a service interruption because the UL/DL communication is interrupted until the UE is connected to the new target cell (UL/DL communication continues with the target gNB) or until the UE is re-connected with the serving gNB (if handover is not successful). While the service interruption might be less of a problem for mobility between networks with small round-trip delays (such as terrestrial networks), the service interruption is a problem for mobility with large round-trip delays (such as for UEs moving between different NTN-networks, e.g. satellites). Correspondingly, it is of interest to reduce the service interruption, caused by the UE stopping the UL/DL communication until the UE is connected to the target gNB or, if handover fails, re-connects to its serving gNB again.

This can be achieved by the UE continuing to communicate with the serving gNB, even after participating in the (conditional) handover and even after starting the random access procedure with the target cell. In more detail, the UE receives the handover command and initiates the random access procedure to connect to the target gNB but still continues with the DL/UL transmissions with the serving gNB. This correspondingly applies to the serving gNB, which also continues to transmit the DL data and receive the UL data, the same as before deciding to handover the UE. In that case however, the UE has to perform the UL/DL communication in parallel to the random access procedure, and it is advantageous to coordinate the uplink and downlink transmissions to/from the serving gNB with the uplink and downlink transmission for the random access to/from the target gNB. This can be achieved by the following solutions, described with reference to **Fig. 16 to 21.**

In brief, the UE operates a DRX (Discontinued reception) function (more details later) which defines DRX-Active time periods during which the UE can actively communicate and further provides the UE with power-saving opportunities during so-called DRX-off time periods. According to one exemplary solution, the UE continues to communicate with the serving base station during the DRX active time, while using the DRX off periods to perform the random access procedure with the target cell. In that way, it is possible for the UE to communicate in parallel with the serving base station and the target base station. The UE may thus interrupt the communication with the serving base station upon having established the connection with the target gNB. In consequence, a make-before-break handover is achieved such that the service interruption due to the handover is minimized.

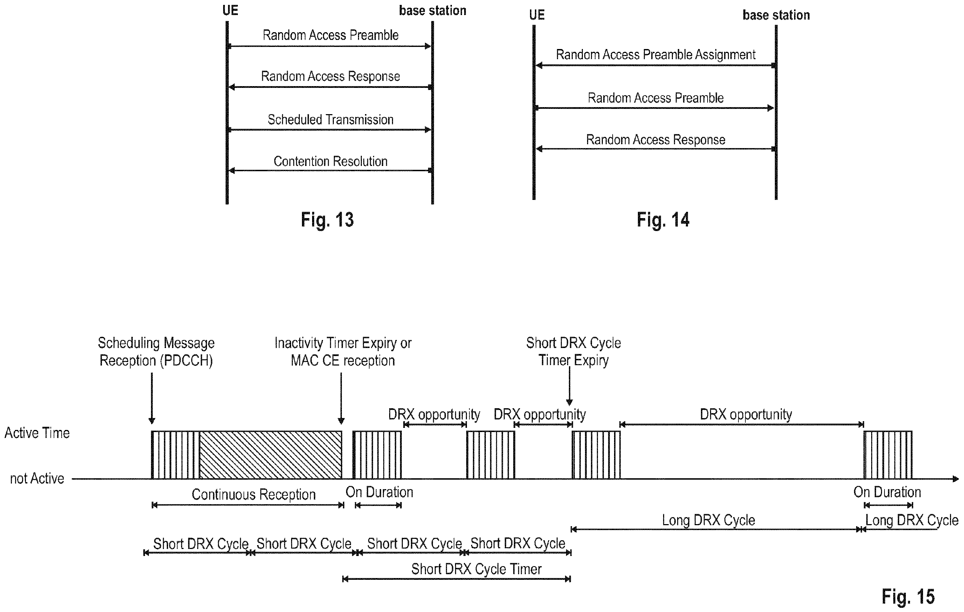

In the following, more details regarding the random access procedure and the DRX function are provided with reference to **Fig. 13 to 15**, while explaining different implementations of the improved handover communication procedure in more detail with respect to **Fig. 16 to 21.** One specific and exemplary random access procedure that can be used for the present solutions will be explained in the following. Similar to LTE, 5G NR provides a RACH (Random Access Channel) procedure (or simply random access procedure) (see 3GPP TS 38.321, v15.3.0 section 5.1). For instance, the RACH procedure can be used by the UE to access a cell it has found. The RACH procedure can also be used in other contexts within NR, for example:

- For handover, when synchronization is to be established to a new cell;
- To reestablish uplink synchronization to the current cell if synchronization has been lost due to a too long period without any uplink transmission from the device;
- To request uplink scheduling if no dedicated scheduling request resource has been configured for the device.

The RACH procedure will be described in the following in more detail, with reference to **Fig. 13 and 14.** A mobile terminal can be scheduled for uplink transmission, if its uplink transmission is time synchronized. The Random Access Channel (RACH) procedure plays a role as an interface between non-synchronized mobile terminals (UEs) and the orthogonal transmission of the uplink radio access. For instance, the Random Access is used to achieve uplink time synchronization for a user equipment which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be two types of random access procedures allowing access to be either contention based, i.e. implying an inherent risk of collision, or contention free (non-contention based).

In the following, the contention-based random access procedure is being described in more detail with respect to **Fig. 13.** This procedure consists of four "steps". First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipment transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, since the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual random access procedure message like for example an RRC Connection Request, RRC Resume Request or a buffer status report.

In case of a preamble collision having occurred in the first message of the RACH procedure, i.e. multiple user equipment have sent the same preamble on the same PRACH resource, the colliding user equipment will receive the same T-CRNTI within the random access response and will also collide in the same uplink resources when transmitting their scheduled transmission in the third step of the RACH procedure. In case the scheduled transmission from one user equipment is successfully decoded by base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 14** is illustrating the contention-free random access procedure, which is simplified in comparison to the contention-based random access procedure. The base station provides in a first step the user equipment with the preamble to use for random access so that there is no risk of collisions, i.e. multiple user equipment transmitting the same preamble. Accordingly, the user equipment is subsequently sending the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP is also studying a two-step RACH procedure for 5G NR, where a message 1, that corresponds to messages 1 and 3 in the four-step RACH procedure, is transmitted at first. Then, the gNB will respond with a message 2, corresponding to messages 2 and 4 of the LTE RACH procedure. Due to the reduced message exchange, the latency of the two-step RACH procedure may be reduced compared to the four-step RACH procedure. The radio resources for the messages are optionally configured by the network.

After having introduced an exemplary random access procedure, one specific and exemplary DRX function that can be assumed for the present solution will be described in the following. Battery saving is an important issue in mobile communication. To reduce the battery consumption in the UE, a mechanism to minimize the time the UE spends monitoring the PDCCH is used, which is called the Discontinuous Reception (DRX) functionality.

DRX functionality can be configured for RRC_IDLE. DRX functionality can be also configured for an "RRC_CONNECTED" UE, so that it does not always need to monitor the downlink channels for downlink control information (or phrased simply: the UE monitors the PDCCH). (see Technical Standard TS 36.321, version 15.2.0, chapter 5.7).

The following parameters are available to define the DRX UE behavior; i.e. the On-Duration periods at which the mobile node is active (e.g. in DRX Active Time), and the periods where the mobile node is in DRX (e.g. not in DRX Active Time, in DRX off time).

- On-duration: duration in downlink subframes, i.e. more in particular in subframes with PDCCH (also referred to as PDCCH subframe), that the user equipment, after waking up from DRX, receives and monitors the PDCCH. It should be noted here that throughout this invention the term "PDCCH" refers to the PDCCH, EPDCCH (in subframes when configured) or, for a relay node with R-PDCCH configured and not suspended, to the R-PDCCH. If the user equipment successfully decodes a PDCCH, the user equipment stays awake/active and starts the inactivity timer; [1-200 subframes; 16 steps: 1-6, 10-60, 80, 100, 200]
- DRX inactivity timer: duration in downlink subframes that the user equipment waits to successfully decode a PDCCH, from the last successful decoding of a PDCCH; when the UE fails to decode a PDCCH during this period, it re-enters DRX. The user equipment shall restart the inactivity timer following a single successful decoding of a PDCCH for a first transmission only (i.e. not for retransmissions). [1-2560 subframes; 22 steps, 10 spares: 1-6, 8, 10-60, 80, 100-300, 500, 750, 1280, 1920, 2560]
- DRX Retransmission timer: specifies the number of consecutive PDCCH subframes where a downlink retransmission is expected by the UE after the first available retransmission time. [1-33 subframes, 8 steps: 1, 2, 4, 6, 8, 16, 24, 33]

- DRX short cycle: specifies the periodic repetition of the on-duration followed by a possible period of inactivity for the short DRX cycle. This parameter is optional. [2-640 subframes; 16 steps: 2, 5, 8, 10, 16, 20, 32, 40, 64, 80, 128, 160, 256, 320, 512, 640]
- DRX short cycle timer: specifies the number of consecutive subframes the UE follows the short DRX cycle after the DRX Inactivity Timer has expired. This parameter is optional. [1-16 subframes]
- Long DRX Cycle Start offset: specifies the periodic repetition of the on-duration followed by a possible period of inactivity for the DRX long cycle as well as an offset in subframes when on-duration starts (determined by formula defined in TS 36.321 section 5.7); [cycle length 10-2560 subframes; 16 steps: 10, 20, 30, 32, 40, 64, 80, 128, 160, 256, 320, 512, 640, 1024, 1280, 2048, 2560; offset is an integer between [0 - subframe length of chosen cycle]]

The total duration that the UE is awake is called "Active time" or DRX Active Time. The Active Time e.g. includes the on-duration of the DRX cycle, the time UE is performing continuous reception while the inactivity timer has not expired and the time UE is performing continuous reception while waiting for a downlink retransmission after one HARQ RTT. Similarly, for the uplink the UE is awake (i.e. in DRX Active Time) at subframes where uplink retransmission grants can be received, i.e. every 8ms after an initial uplink transmission until the maximum number of retransmissions is reached. Based on the above, the minimum Active Time is of fixed length equal to on-duration, and the maximum is variable depending on e.g. the PDCCH activity.

The "DRX period" or "DRX off period" is the duration of downlink subframes during which a UE can skip reception of downlink channels for battery saving purposes, i.e. is not required to monitor the downlink channels. The operation of DRX gives the mobile terminal the opportunity to deactivate the radio circuits repeatedly (according to the currently active DRX cycle) in order to save power. Whether the UE indeed remains in DRX (i.e. is not active) during the DRX period may be decided by the UE; for example, the UE usually performs inter-frequency measurements which cannot be conducted during the On-Duration, and thus need to be performed at some other time, e.g. during the DRX off time.

The parameterization of the DRX cycle involves a trade-off between battery saving and latency. To meet these conflicting requirements, two DRX cycles - a short cycle and a long cycle - can be configured for each UE; the short DRX cycle is optional, i.e. only the long DRX cycle could be used. The transition between the short DRX cycle, the long DRX cycle and continuous reception is controlled either by a timer or by explicit commands from the eNodeB.

**Fig. 15** discloses an example of a DRX operation. The UE checks for scheduling messages (can also be termed downlink/uplink assignment; e.g. indicated by its C-RNTI, cell radio network temporary identity, on the PDCCH) during the "on-duration" period, which is the same for the long DRX cycle and the short DRX cycle. When a scheduling message is received during an "on-duration period", the UE starts an "inactivity timer" and keeps monitoring the PDCCH in every subframe while the Inactivity Timer is running. During this period, the UE can be regarded as being in a "continuous reception mode". Whenever a scheduling message is received while the Inactivity Timer is running, the UE restarts the Inactivity Timer, and when it expires the UE moves into a short DRX cycle and starts a "short DRX cycle timer" (assuming a short DRX cycle is configured). When the short DRX cycle timer expires, the UE moves into a long DRX cycle. The short DRX cycle may also be initiated by means of a DRX MAC Control Element, which the eNB can send at any time to put the UE immediately into a DRX cycle, i.e. the short DRX cycle (if so configured) or long DRX cycle (in case the short DRX cycle is not configured).

The basic concepts for DRX as explained above for LTE also apply to the new 5G NR, with some differences (see 3GPP TS 38.321 v15.2.1 section 5.7).

As apparent therefrom, the DRX for 5G NR is also based on the Long DRX cycle and Short DRX cycle and the transition between them based on a Short DRX Cycle timer, defines an On-Duration at the beginning of the DRX cycle, a DRX Inactivity timer determines the duration of continues reception after receiving a PDCCH after which the UE goes to sleep. Therefore, conceptually the 5G-NR DRX mechanism works as illustrated in **Fig. 15.**

With reference to **Fig. 16**, an improved handover communication solution is presented allowing the UE to access the target cell and continue to communicate with the serving cell in parallel. The corresponding UE behavior is illustrated in **Fig. 17**, according to a simplified and exemplary implementation.

It is assumed that the UE is eventually handed over from its serving gNB to another neighbour gNB. Correspondingly and as apparent from Fig. 16, it is exemplarily assumed that the UE is communicating in UL/DL with the serving gNB. It is further assumed that the UE transmits a measurement report to the serving base station. The measurement report could be e.g. transmitted according to the improved measurement and reporting solutions discussed above in connection with Fig. 6-9, but could also have been transmitted by the UE as commonly known in the prior art. In other words, the following improved handover solution can be optionally combined with the previously discussed improved measurement and reporting procedure, but may also be used stand alone.

Although not illustrated, it is assumed that the UE keeps communicating with the serving gNB during the initiation of the handover (e.g. while the serving gNB takes the handover decision, transmits the handover request and receives the handover acknowledgement).

The serving gNB is assumed to decide in favor of a handover and thus initiates the handover procedure with the neighbour gNB as the target of the UE handover, by transmitting a handover request message and receiving in return the handover acknowledgement message. The serving gNB then transmits the handover command message to the UE. The handover command may be a non-conditional handover command, where the UE is forced to execute the handover. According to a different solution, the handover command message may instead be conditional, e.g. at least including a handover accept condition for the UE to finally decide whether and when to execute the handover based on the handover accept condition. Moreover, the handover command message may optionally further comprise a handover reject condition in line with the improved conditional handover solutions explained above in connection with Fig. 10-12. In other words, the improved handover communication solution presented herewith can, but need not, be combined with the improved conditional handover solution.

Furthermore, it is assumed that the UE, after receiving the (conditional) handover command, starts connecting to the target gNB, which is done by performing the random access procedure between the UE and the target neighbour gNB. In parallel, the UE is supposed to continue communicating with the serving gNB. This parallel operation is illustrated in Fig. 16 as respective boxes, which then include arrows to indicate specific messages exchanged between the entities.

The UE and serving gNB are operating a DRX function, e.g. similar to or the same as exemplarily presented above in connection with Fig. 15. So as to keep Fig. 16 clear, the DRX off time periods and DRX active time periods are only illustrated for the parallel communication of the UE with the serving gNB and the target gNB, although it should be understood that the DRX function is also followed before by the UE and the serving gNB when communicating with each other.

The DRX function alternates DRX active time periods during which the UE may communicate with a gNB (UL and/or DL) and DRX off time periods during which the UE has the opportunity to save power, e.g. by neither transmitting nor monitoring channels for reception of data. According to the present improved handover communication solution and also illustrated in Fig. 16, the UE communicates with the serving base station, during the DRX active time periods, while communicating with the target gNB during the DRX off periods. This includes transmitting messages 1 and 3 of the random access procedure to the neighbour gNB during the DRX off periods, while receiving messages 2 and 4 of the random access procedure from the neighbour gNB during the DRX off periods. Thus, it is possible that the serving gNB and the UE still continue with the DL/UL transmissions without colliding with the random access procedure performed between the UE and the target gNB.

There are several implementations on how to achieve that the UE performs the random access procedure during the DRX off periods. In brief, the DRX function performed in the serving radio cell is coordinated with the PRACH resources to be used by the UE in the target radio cell. For instance, the target gNB has uplink resources reserved for random access procedures and can reserve dedicated resources among these PRACH resources for the UE to be handed over. These dedicated PRACH resources can then be used by the UE and the target gNB to exchange the messages of the random access procedure.

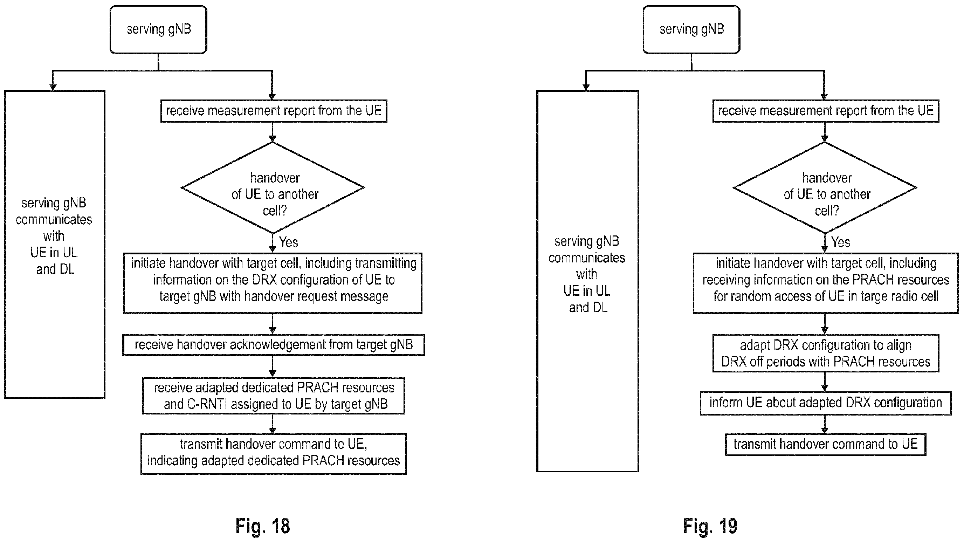

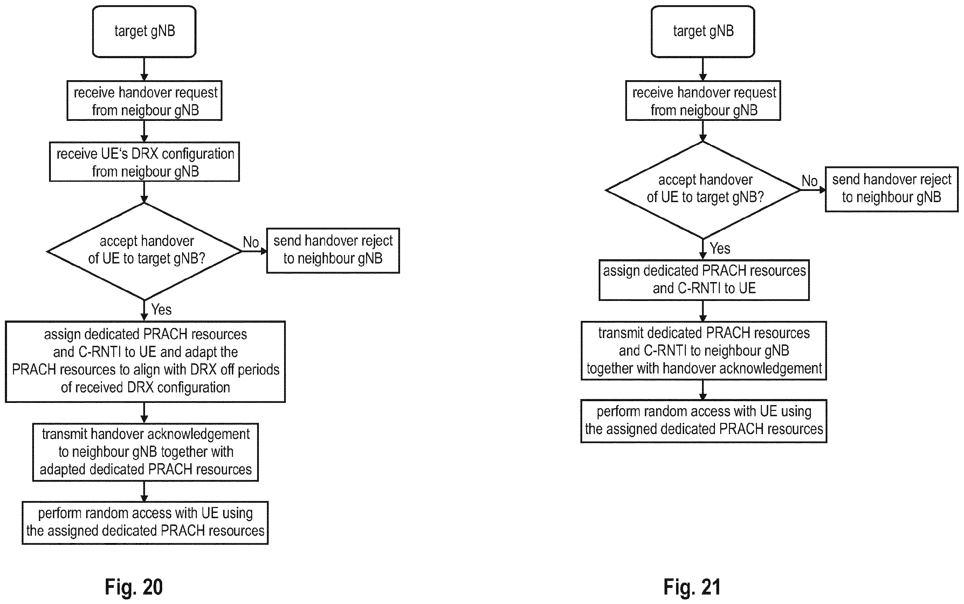

According to one exemplary implementation (illustrated in **Fig. 18 and 20**), the serving gNB transmits information on the DRX configuration of the UE to the target gNB. The target gNB then can adapt the PRACH resources to be used by the UE for the random access procedure to the DRX configuration received from the serving gNB, such that the PRACH resources that the UE will use will fall into the DRX off periods. This information on the DRX configuration of the UE could e.g. be transmitted together with the handover request message (see Fig. 16), or in a message separate from the handover request message. Fig. 20 is illustrated to cover both variants. Moreover, information on the adapted PRACH resources is to be provided to the UE. According to one implementation, the PRACH resource information is first transmitted to the serving gNB (e.g. together with the handover acknowledgement message, as illustrated exemplarily in Fig. 20) and then to the UE e.g. with the handover command message (or separately therefrom).

In any case, the UE will receive information on the PRACH resources (already adapted by the target gNB), which the UE will use for the random access procedure, and uses those PRACH resources that, as configured by the target gNB, fall into the off periods of its DRX function. Similarly, the target gNB also uses the coordinated timing when transmitting the random access messages 2 and 4 to the UE, which thus can be received by the UE during its DRX off time periods where it does not communicate with the serving gNB. The UE correspondingly monitors (e.g. the PDCCH with the target gNB) during its DRX off time periods as to whether a random access message is received.

Information on the round-trip-delay, experienced by the UE when communicating with the serving gNB (e.g. the timing advance value or the Reference Signal Time Difference Measurement), can be transmitted to the target gNB as well, e.g. together with or separately from the DRX configuration. This information can then be used by the target gNB to more precisely align the PRACH resources with the off time periods of the DRX function, so as to avoid that the delay in communication causes the PRACH resources to fall into the DRX active periods instead of the DRX off periods.

In addition or alternatively, the round-trip delay, experienced by another UE when communication with the target gNB (e.g. the timing advance value or the Reference Signal Time Difference Measurement) can be used by the target gNB improve the coordination of the dedicated PRACH resources with the DRX off periods. Put differently, the round-trip delay for the other UE is used as an estimation of the round-trip delay that will be experienced by the UE when performing the random access procedure with the target gNB. This is advantageous in that no exchange of information regarding the round-trip delay is necessary, because the round-trip delay for other UEs is known at the target gNB. Moreover, the round-trip delay estimation may be more accurate, because it is estimated with reference to the same target gNB with which the UE will perform the random access.

In the previous implementation, the PRACH resources were adapted while keeping the DRX function as initially configured. Instead however, according to a second exemplary implementation explained in connection with **Fig. 19 and 21**, the DRX configuration used by the UE with the serving base station is adapted to be coordinated with the PRACH resources at the target gNB. In more detail, the serving gNB learns about the PRACH resources in the target gNB that will be used by the UE for the random access and then adapts the DRX configuration such that the DRX off periods regarding the serving radio cell coincide with the PRACH resources to be used in the target radio cell. The serving gNB can obtain information on the PRACH resources in the target radio cell e.g. from the target gNB. In one exemplary implementation, the target gNB, upon receiving the handover request, provides information on the PRACH resource together with the handover acknowledgment message to the serving gNB.

Alternatively, the serving gNB may obtain information on the PRACH resources based on the Physical Cell Identity of the neighbour radio cell. The Physical Cell Identity (PCI) is obtained by the serving gNB e.g.from the measurement report received from the UE. It is hereby assumed that the PRACH resources are related to the Physical Cell Identity such that the serving gNB can derive the PRACH resources from the PCI. For instance, there may be a plurality of different PRACH resource configurations, e.g. 3 in total, which are derivable e.g. based on the formula PCI mod3, wherein any PCI that fulfills PCI mod3=0 is associated with PRACH resource configuration 0, wherein any PCI that fulfills PCI mod3=1 is associated with PRACH resource configuration 1, and wherein any PCI that fulfills PCI mod3=2 is associated with PRACH resource configuration 2.

In any case, the DRX configuration to be used by the UE in the serving gNB is adapted accordingly. The UE is informed on the adapted DRX configuration and follows same. For instance, the adapted DRX configuration can be transmitted to the UE together with or separate from the handover command message (e.g. using the RRCReconfiguration message).

Similar to what was already explained in connection with the above first exemplary implementation (adapt PRACH resources to DRX configuration), information on the round-trip delay experienced by the UE when communicating with the serving gNB can be used by the serving gNB to more precisely align the PRACH resources with the time periods of the DRX function. Information on the RTD in the serving radio cell is already available at the serving gNB. In addition or alternatively, information on the round-trip delay experienced by another UE when communicating with the target gNB is transmitted by the target gNB to the serving gNB, which then uses this target-gNB-related round-trip delay for configuring the DRX off periods with the dedicated PRACH resources in the target cell.

According to the above described improved handover communication solution, the communication interruption caused by the handover is minimized, because it is possible that the communication between the UE and the serving gNB continues also while the UE performs a random access with the target radio cell. Effectively, a make-before-break handover is achieved.

One important mechanism generally used for LTE and 5G for improving communication between the UE and the gNBs is the Hybrid Automatic Repeat Request HARQ mechanism (see 3GPP TS 36.321 v15.4.0 clause 5.4.2 and TS 38.321 v15.4.0 clause 5.4.2). According to one exemplary implementation, the following improved retransmission function can be based thereon.

There are two levels of re-transmissions for providing reliability, namely, HARQ at the MAC layer and outer ARQ at the RLC layer. HARQ is a common technique for error detection and correction in packet transmission systems over unreliable channels. Hybrid ARQ is a combination of Forward Error Correction (FEC) and ARQ. If a FEC encoded packet is transmitted and the receiver fails to decode the packet correctly (errors are usually checked by a CRC, Cyclic Redundancy Check), the receiver requests a retransmission of the packet.

The MAC layer comprises a HARQ entity, which is responsible for the transmit and receive HARQ operations. The transmit HARQ operation includes transmission and retransmission of transport blocks, and reception and processing of ACK/NACK signaling. The receive HARQ operation includes reception of transport blocks, combining of the received data and generation of ACK/NACK signaling. In order to enable continuous transmission while previous transport blocks are being decoded, up to 16 HARQ processes in parallel are used to support multiprocess "Stop-And-Wait" (SAW) HARQ operation. Each HARQ process is responsible for a separate SAW operation and manages a separate buffer.

The feedback provided by the HARQ protocol is either an Acknowledgment (ACK) or a negative Acknowledgment (NACK). ACK and NACK are generated depending on whether a transmission could be correctly received or not (e.g. whether decoding was successful). Furthermore, in HARQ operation the eNB can transmit different coded versions from the original transport block in retransmissions so that the UE can employ incremental-redundancy-(IR)-combining to get additional coding gain via the combining gain.

If a FEC-encoded packet is transmitted and the receiver fails to decode the packet correctly (errors are usually checked by a CRC, Cyclic Redundancy Check), the receiver requests a retransmission of the packet. Generally (and throughout this document), the transmission of additional information is called "retransmission (of a packet)", and this retransmission could but does not necessarily mean a transmission of the same encoded information; it could also mean the transmission of any information belonging to the packet (e.g. additional redundancy information) e.g. by use of different redundancy versions.

As described above, HARQ is thus used between the UE and the gNBs. This equally applies to the scenarios discussed above, where the UE and serving gNB are communicating with each other. Furthermore, HARQ can also be used for the random access procedure between the UE and the target gNB. This also applies to situations introduced above where the UE communicates in parallel with the serving base station (UL/DL communication) and with the target gNB (random access) during the handover (see e.g. Fig. 16). For instance, if 8 HARQ processes are available in total at the UE, these 8 HARQ processes can be shared for communicating with the serving gNB and the target gNB. However, the serving cell and the target cell are not required to coordinate the HARQ process IDs.

There may be cases where all HARQ processes are already in use for the communication with the serving cell, when the UE starts the random access procedure. In order to still be able to use HARQ for the random access with the target cell, the UE can re-assign one of the HARQ processes, that it uses for communicating with the serving cell, for the random access procedure, thereby overwriting memory associated with that HARQ process with data from the random access message. Effectively, the UE cancels one of the HARQ processes and uses it then for the random access procedure.

The UE may select the HARQ process e.g. based on the priority of the data which is included in the HARQ process, or UE may select the HARQ process based on the data rate of the HARQ process, or UE may just simply select the HARQ process randomly among all the HARQ processes.

A simplified and exemplary UE behavior in line with the above is illustrated in **Fig. 22.**

This one re-assigned HARQ process can no longer be used for communicating with the serving gNB. However, the serving gNB still uses that re-assigned HARQ process, because it does not know that the UE now uses it for a different purpose. Correspondingly, the serving gNB may retransmit data for that re-assigned HARQ process. In that case however, the data from the HARQ process is no longer available (no HARQ combining is possible), and the UE tries to decode the data from newly-received transmission alone. If not successful, the UE may transmit a NACK to the serving gNB.

On the other hand, if the UE is to transmit a new uplink transmission to the serving gNB and no HARQ process is available, the UE performs the UL transmission without any HARQ process, e.g. it does not keep the UL transmission in the HARQ buffer. If the serving gNB requests a retransmission for that UL data, the UE needs to encode the same data and transmit it again to the serving gNB.

Alternatively, the serving gNB may try to avoid that all HARQ processes are in use during the handover. For example, if the serving gNB is aware that the UE is approaching to the cell edge (through the measurement report), then it can reduce its DL transmissions or UL grants to the UE so that at least one HARQ process can be free for UE to perform the random access with the target gNB.

*Further Aspects*

According to a first aspect, a UE is provided which comprises processing circuitry, which in operation, performs power-related measurements on at least one radio carrier and generates measurement results based on the performed measurements. The reporting of the measurement results by the UE is based on at least one report trigger condition to be fulfilled. The processing circuitry determines whether or not to adjust at least one of the measurement results and the at least one report trigger condition so as to trigger the reporting of the measurement results earlier than without the adjustment. In case of determining to adjust, the processing circuitry adjusts at least one of the measurement results and the at least one report trigger condition so as to trigger the reporting of the measurement results earlier than without the adjustment. The processing circuitry, after the adjustment, determines whether or not the at least one report trigger condition is fulfilled for reporting the measurement results based on the at least one report trigger condition and the generated measurement results. A transmitter of the UE transmits a measurement report including the measurement results, in case the reporting of the measurement results is triggered.

According to a second aspect provided in addition to the first aspect, the adjusting of the at least one report trigger condition includes that the processing circuitry, when in operation, applies at least one positive or negative power offset to the at least one report trigger condition. In one optional implementation, the processing circuitry determines the offset from configuration information received from a serving base station to which the UE is connected, or determines the offset based on the difference between the generated measurement results and previously generated measurement results. In another optional implementation, one offset is determined for each measurement result among the generated measurement results and is used in the adjustment, optionally wherein, per report trigger condition, one offset is determined for a serving radio carrier or for a neighbour radio carrier. In another optional implementation, one offset is determined for a serving radio carrier and another offset is determined for a neighbour radio carrier. In another optional implementation, one offset is determined for each report trigger condition and is used in the adjustment.

According to a third aspect provided in addition to the first or second aspect, the adjusting of the measurement results includes that the processing circuitry determines the difference between the generated measurement results and a previously generated measurement result, and applies the determined difference to the generated measurement results to generate adjusted measurement results. The processing circuitry determines whether or not to report the measurement result based on the at least one report trigger condition and the adjusted measurement results.

According to a fourth aspect provided in addition to any of first to third aspects, the performing of measurements by the processing circuitry includes performing measurements on at least one non-terrestrial radio carrier. In an optional implementation, the determining by the processing circuitry whether or not to perform the adjustment is based on whether the radio carrier is a non-terrestrial radio carrier or a terrestrial radio carrier. In an optional implementation, the adjustment is performed when the report trigger condition is based on a measurement result of a measurement performed on a non-terrestrial radio carrier.

According to a fifth aspect, provided in addition to one of the first to fourth aspects, the measurement results are usable by a serving base station, to which the UE is connected, to determine whether to initiate the procedure to handover the UE from its current serving radio cell, controlled by the serving base station, to another radio cell. The at least one report trigger condition is configured such that it is fulfilled when an initiation of a procedure to handover the UE from the current serving radio cell to another cell could be decided by the serving base station.

According to a sixth aspect, provided in addition to one of the first to fifth aspects, the UE further comprises a receiver, which receives a conditional handover command, wherein the conditional handover command message comprises at least one handover accept condition to be fulfilled for the UE to perform the handover and/or further comprises at least one handover reject condition to be fulfilled for the UE to reject the handover. The processing circuitry determines whether the handover accept condition is fulfilled, and in case the handover accept condition is fulfilled, performs a handover according to the received conditional handover command, and optionally in case the handover accept condition is not fulfilled, transmits information on the handover rejection. In another optional implementation, the processing circuitry determines whether the handover reject condition is fulfilled, and in case the handover reject condition is fulfilled, transmits information on the handover rejection.

According to a seventh aspect provided in addition to the sixth aspect, the information on the handover rejection is transmitted in a radio resource control, RRC, message or as another measurement report. Alternatively, the information on the handover rejection is transmitted together with uplink data, optionally wherein the information on the handover rejection is transmitted as a Control Element, CE, of the Medium Access Control, MAC, protocol. In an optional implementation, the processing circuitry determines whether uplink data is to be transmitted or not to the serving base station, and in case no uplink data is to be transmitted, the handover rejection is transmitted in the RRC message or as the other measurement report, and in case uplink data is to be transmitted, the handover rejection is transmitted together with the uplink data.

According to an eighth aspect provided in addition to one of the sixth to seventh aspects, in case the processing circuitry determines that the handover reject condition is fulfilled, the processing circuitry determines to not transmit a measurement report for a period of time after transmitting the information on the handover rejection to the serving base station. In an optional implementation, the period of time is configured by the serving base station.

According to a ninth aspect provided in addition to one of the first to eighth aspects, in case neither the handover accept condition nor the handover reject condition are fulfilled, a transmitter, when in operation, transmits a resource reservation extension request to the serving base station so as to extend a resource reservation time in a neighbour radio cell.

According to a tenth aspect, provided in addition to one of the first to ninth aspects, the UE performs a handover from its current serving radio cell to another radio cell, wherein performing the handover includes performing by the UE a random access procedure with the other radio cell. The UE, after starting performing the handover to the other radio cell, continues communicating with the serving radio base station in the uplink and/or downlink, during communication time periods of a discontinued reception, DRX, function operated by the UE for communication with the serving base station. The UE transmits messages of the random access procedure during sleep time periods of a discontinued reception, DRX, function operated by the UE for communication with the serving radio cell, optionally wherein the communication time periods do not overlap the sleep time periods. In an optional implementation, the UE receives messages of the random access procedure during the sleep time periods of the DRX function.

According to an eleventh aspect, provided in addition to one of the first to tenth aspects, the UE performs a handover from its current serving radio cell to another radio cell, wherein performing the handover includes performing a random access procedure with the other radio cell. The UE, after starting performing the handover to the other radio cell, continues communicating with the serving base station in the uplink and/or downlink using a plurality of hybrid automatic repeat request, HARQ, processes. The UE uses the plurality of HARQ processes for the random access procedure, and in case all of the plurality of HARQ processes are already used for communicating with the serving base station, the processing circuitry, when in operation, determines one of the plurality of HARQ processes to be re-used for the random access procedure instead.

According to a twelfth aspect, provided in addition to the eleventh aspect, each of the HARQ process is used to store previously-transmitted data in the associated memory for a possible later re-transmission or stores previously-received data in the associated memory for a possible later combining with later-received data. Re-using the HARQ process for the random access procedure includes overwriting the memory associated with the re-used HARQ process with data buffered for the random access procedure. In an optional implementation, the processing circuitry, when in operation and in case all the HARQ processes are used and one of the HARQ processes is being re-used for the random access procedure, does not use the re-used HARQ processes to store a new uplink transmission. In another optional implementation, the processing circuitry, in case all the HARQ processes are used and one of the HARQ processes is being re-used for the random access procedure, does not use the re-used HARQ processes to store a received downlink transmission.

According to a thirteenth aspect, a method is provided, comprising the following steps performed by a user equipment, UE:

performing power-related measurements on at least one radio carrier and generating measurement results based on the performed measurements, wherein the reporting of the measurement results by the UE is based on at least one report trigger condition to be fulfilled,

determining whether or not to adjust at least one of the measurement results and the at least one report trigger condition so as to trigger the reporting of the measurement results earlier than without the adjustment,

in case of determining to adjust, adjusting at least one of the measurement results and the at least one report trigger condition so as to trigger the reporting of the measurement results earlier than without the adjustment,

after the adjustment, determining whether or not the at least one report trigger condition is fulfilled for reporting the measurement results based on the at least one report trigger condition and the measurement results,

transmitting a measurement report including the measurement results, in case the reporting of the measurement results is triggered.

According to a fourteenth aspect, a base station is provided comprising processing circuitry, which determines whether to instruct a user equipment, UE, to adjust at least one of measurement results and at least one report trigger condition so as to trigger the reporting of the measurement results earlier than without the adjustment. A transmitter of the base station, in case the determination by the processing circuitry is to instruct the UE, configures the UE to adjust at least one of measurement results and at least one report trigger condition so as to trigger the reporting of the measurement results earlier than without the adjustment. A receiver of the base station receives a measurement report from the UE, the measurement report including results of measurements performed by the UE on at least one radio carrier, wherein the reporting of the measurement results by the UE is based on the at least one report trigger condition to be fulfilled.

According to a fifteenth aspect, provided in addition to the fourteenth aspect, the processing circuitry determines at least one positive or negative power offset to the at least one report trigger condition. The transmitter transmits configuration information to the UE, indicating the determined positive or negative power offset. In an optional implementation, one offset is determined for each measurement results among the generated measurement results. In an optional implementation, per report trigger condition, one offset is determined for a serving radio carrier or for a neighbour radio carrier. In an optional implementation, one offset is determined for a serving radio carrier and another offset is determined for a neighbour radio carrier.

According to a sixteenth aspect, provided in addition to the fourteenth or fifteenth aspect, the determination by the processing circuitry, of whether to instruct a user equipment, UE, to adjust at least one of measurement results and at least one report trigger condition so as to trigger the reporting of the measurement results earlier than without the adjustment, is based on whether the radio carrier is a non-terrestrial radio carrier or a terrestrial radio carrier. In an optional implementation, the processing circuitry determines to instruct the UE to adjust is done in case the UE performs measurements on a non-terrestrial radio carrier.

According to a seventeenth aspect, provided in addition to any of the fourteenth to sixteenth aspects, the transmitter transmits a conditional handover command to the UE, wherein the conditional handover command message comprises at least one handover accept condition to be fulfilled for the UE to perform the handover and/or further comprises at least one handover reject condition to be fulfilled for the UE to reject the handover. In an optional implementation, the receiver receives information on a rejection of a handover of the UE, and the transmitter transmits a request to the neighbour target base station, being the target of the handover, so as to release the any resources in the neighbour radio cell reserved for the handover of the UE. In an optional implementation, the receiver receives a first resource reservation extension request from the UE so as to extend a resource reservation time in a neighbour radio cell. The transmitter transmits a second resource reservation extension request to the neighbour target base station, being the target of the handover, so as to extend the resource reservation time in the neighbour radio cell.

According to an eighteenth aspect, provided in addition to any of the fourteenth to seventeenth aspects, the processing circuitry adapts sleep time periods of a discontinued, DRX, function operated by the UE for communication with the base station, to coincide with random access resources, to be used by the UE to perform the random access procedure with the neighbour target base station. In an optional implementation, the processing circuitry obtains information on the random access resources of the neighbour target base station, based on information received from the neighbour target base station, or based on a cell identity of the neighbour target base station.

According to a nineteenth aspect, provided in addition to any of the fourteenth to eighteenth aspects, another UE is handed over from another base station to the base station as the target of the handover, wherein the transmitter transmits messages of the random access procedure to the other UE during sleep time periods of a discontinued, DRX, function operated by the other UE for communication with the other base station, and the receiver receives messages of the random access procedure from the other UE during the sleep time periods of the DRX function. In an optional implementation, the receiver receives configuration information on the DRX function of the other UE. The processing circuitry adapts random access resources, to be used by the other UE to perform the random access procedure with the base station, to coincide with the sleep time periods of the DRX function. The transmitter transmits information on the adapted random access resources to the other base station.

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

**Claims**

1. A user equipment, UE, comprising:

   processing circuitry, which in operation, performs power-related measurements on at least one radio carrier and generates measurement results based on the performed measurements, wherein the reporting of the measurement results by the UE is based on at least one report trigger condition to be fulfilled,
   the processing circuitry, when in operation, determines whether or not to adjust at least one of the measurement results and the at least one report trigger condition so as to trigger the reporting of the measurement results earlier than without the adjustment,
   in case of determining to adjust, the processing circuitry, when in operation, adjusts at least one of the measurement results and the at least one report trigger condition so as to trigger the reporting of the measurement results earlier than without the adjustment,
   the processing circuitry, when in operation, after the adjustment, determines whether or not the at least one report trigger condition is fulfilled for reporting the measurement results based on the at least one report trigger condition and the generated measurement results,
   a transmitter, which in operation, transmits a measurement report including the measurement results, in case the reporting of the measurement results is triggered.

2. The user equipment according to claim 1, wherein the adjusting of the at least one report trigger condition includes that the processing circuitry, when in operation, applies at least one positive or negative power offset to the at least one report trigger condition,
   optionally wherein the processing circuitry, when in operation, determines the offset from configuration information received from a serving base station to which the UE is connected, or determines the offset based on the difference between the generated measurement results and previously generated measurement results,
   optionally wherein one offset is determined for each measurement result among the generated measurement results and is used in the adjustment, optionally wherein, per report trigger condition, one offset is determined for a serving radio carrier or for a neighbour radio carrier,
   optionally wherein one offset is determined for a serving radio carrier and another offset is determined for a neighbour radio carrier,
   optionally wherein one offset is determined for each report trigger condition and is used in the adjustment.

3. The user equipment according to claim 1 or 2,
   wherein the adjusting of the measurement results includes that the processing circuitry, when in operation, determines the difference between the generated measurement results and a previously generated measurement result, and applies the determined difference to the generated measurement results to generate adjusted measurement results,
   wherein the processing circuitry determines whether or not to report the measurement result based on the at least one report trigger condition and the adjusted measurement results.

4. The user equipment according to any of claims 1 to 3, wherein the performing of measurements by the processing circuitry includes performing measurements on at least one non-terrestrial radio carrier,
   optionally wherein the determining by the processing circuitry whether or not to perform the adjustment is based on whether the radio carrier is a non-terrestrial radio carrier or a terrestrial radio carrier,
   optionally wherein the adjustment is performed when the report trigger condition is based on a measurement result of a measurement performed on a non-terrestrial radio carrier.

5. The user equipment according to any of claims 1 to 4, further comprising a receiver, which in operation, receives a conditional handover command, wherein the conditional handover command message comprises at least one handover accept condition to be fulfilled for the UE to perform the handover and/or further comprises at least one handover reject condition to be fulfilled for the UE to reject the handover,

wherein the processing circuitry, when in operation, determines whether the handover accept condition is fulfilled, and in case the handover accept condition is fulfilled, performs a handover according to the received conditional handover command, and optionally in case the handover accept condition is not fulfilled, transmits information on the handover rejection,

optionally wherein the processing circuitry, when in operation, determines whether the handover reject condition is fulfilled, and in case the handover reject condition is fulfilled, transmits information on the handover rejection.

6.  The user equipment according to claim 5, wherein the information on the handover rejection is transmitted in a radio resource control, RRC, message or as another measurement report, or

    wherein the information on the handover rejection is transmitted together with uplink data, optionally wherein the information on the handover rejection is transmitted as a Control Element, CE, of the Medium Access Control, MAC, protocol,

    optionally wherein the processing circuitry, when in operation, determines whether uplink data is to be transmitted or not to the serving base station, and in case no uplink data is to be transmitted, the handover rejection is transmitted in the RRC message or as the other measurement report, and in case uplink data is to be transmitted, the handover rejection is transmitted together with the uplink data.

7.  The user equipment according to claim 5 or 6, wherein in case the processing circuitry determines that the handover reject condition is fulfilled, the processing circuitry, when in operation, determines to not transmit a measurement report for a period of time after transmitting the information on the handover rejection to the serving base station, optionally wherein the period of time is configured by the serving base station.

8.  The user equipment according to any one of claims 5 to 7, wherein in case neither the handover accept condition nor the handover reject condition are fulfilled, a transmitter, when in operation, transmits a resource reservation extension request to the serving base station so as to extend a resource reservation time in a neighbour radio cell.

9.  The user equipment according to any of claims 1 to 8, wherein the UE performs a handover from its current serving radio cell to another radio cell, wherein performing the handover includes performing by the UE a random access procedure with the other radio cell,

    wherein the UE, after starting performing the handover to the other radio cell, continues communicating with the serving radio base station in the uplink and/or downlink, during communication time periods of a discontinued reception, DRX, function operated by the UE for communication with the serving base station,

    wherein the UE transmits messages of the random access procedure during sleep time periods of a discontinued reception, DRX, function operated by the UE for communication with the serving radio cell, optionally wherein the communication time periods do not overlap the sleep time periods,

    optionally wherein the UE receives messages of the random access procedure during the sleep time periods of the DRX function.

10. A method comprising the following steps performed by a user equipment, UE:

    performing power-related measurements on at least one radio carrier and generating measurement results based on the performed measurements, wherein the reporting of the measurement results by the UE is based on at least one report trigger condition to be fulfilled,

    determining whether or not to adjust at least one of the measurement results and the at least one report trigger condition so as to trigger the reporting of the measurement results earlier than without the adjustment,

    in case of determining to adjust, adjusting at least one of the measurement results and the at least one report trigger condition so as to trigger the reporting of the measurement results earlier than without the adjustment,

    after the adjustment, determining whether or not the at least one report trigger condition is fulfilled for reporting the measurement results based on the at least one report trigger condition and the measurement results,

    transmitting a measurement report including the measurement results, in case the reporting of the measurement results is triggered.

11. A base station comprising:

    processing circuitry, which in operation, determines whether to instruct a user equipment, UE, to adjust at least one of measurement results and at least one report trigger condition so as to trigger the reporting of the measurement results earlier than without the adjustment,

    a transmitter, which in operation and in case the determination by the processing circuitry is to instruct the UE, configures the UE to adjust at least one of measurement results and at least one report trigger condition so as to trigger the reporting of the measurement results earlier than without the adjustment,

a receiver, which in operation, receives a measurement report from the UE, the measurement report including results of measurements performed by the UE on at least one radio carrier, wherein the reporting of the measurement results by the UE is based on the at least one report trigger condition to be fulfilled.

12. The base station according to claim 11, wherein the processing circuitry, when in operation, determines at least one positive or negative power offset to the at least one report trigger condition,

the transmitter, when in operation, transmits configuration information to the UE, indicating the determined positive or negative power offset,

optionally wherein one offset is determined for each measurement results among the generated measurement results, optionally wherein per report trigger condition, one offset is determined for a serving radio carrier or for a neighbour radio carrier,

optionally wherein one offset is determined for a serving radio carrier and another offset is determined for a neighbour radio carrier.

13. The base station according to claim 11 or 12, wherein the determination by the processing circuitry, of whether to instruct a user equipment, UE, to adjust at least one of measurement results and at least one report trigger condition so as to trigger the reporting of the measurement results earlier than without the adjustment, is based on whether the radio carrier is a non-terrestrial radio carrier or a terrestrial radio carrier,

optionally wherein the processing circuitry determines to instruct the UE to adjust is done in case the UE performs measurements on a non-terrestrial radio carrier.

14. The base station according to any of claims 11 to 13, wherein the transmitter, when in operation, transmits a conditional handover command to the UE, wherein the conditional handover command message comprises at least one handover accept condition to be fulfilled for the UE to perform the handover and/or further comprises at least one handover reject condition to be fulfilled for the UE to reject the handover,

optionally wherein the receiver, when in operation, receives information on a rejection of a handover of the UE, and the transmitter, when in operation, transmits a request to the neighbour target base station, being the target of the handover, so as to release the any resources in the neighbour radio cell reserved for the handover of the UE, and optionally wherein the receiver, when in operation, receives a first resource reservation extension request from the UE so as to extend a resource reservation time in a neighbour radio cell, wherein the transmitter, when in operation, transmits a second resource reservation extension request to the neighbour target base station, being the target of the handover, so as to extend the resource reservation time in the neighbour radio cell.

15. The base station according to any of claims 11 to 14, wherein the processing circuitry, when in operation, adapts sleep time periods of a discontinued, DRX, function operated by the UE for communication with the base station, to coincide with random access resources, to be used by the UE to perform the random access procedure with the neighbour target base station,

optionally wherein the processing circuitry, when in operation, obtains information on the random access resources of the neighbour target base station, based on information received from the neighbour target base station, or based on a cell identity of the neighbour target base station.

Fig. 1

Fig. 2

Fig. 3

Fig. 4

**Fig. 5**

**Fig. 6**

**Fig. 7**

**Fig. 8**

Fig. 9

Fig. 10

UE Start

perform measurements and
report measurements

receive conditional handover command,
with handover accept conditions and
handover reject conditions

handover accept
conditions fulfilled?

handover to target radio cell ◄─── Yes

No

handover reject
conditions fulfilled?

reject handover and
inform serving gNB ◄─── Yes

No

perform measurements

optional

resource
reservation timer in target cell
already expired?

Perform RRC connection
reestablishment ◄─ ─ ─ Yes

No

send request to serving gNB for target gNB
to extend radio resource reservation for UE

Fig. 11

gNB Start

gNB configures measurement and
reporting configuration of UE

receive measurement report from the UE

conditional handover
of UE to another
cell?

Yes

transmit conditional handover command to UE

suspend DL transmission with UE

inform neighbour gNB to release
resources reserved for UE

Yes

receive handover rejection
from UE?

gNB resumes DL transmission with UE

No

optional

receive
resource extension request
from UE?

Yes

inform neighbour gNB
to extend resources
reserved for UE

No

assume UE perform already
the handover to neighbour gNB

Fig. 12

Fig. 14

Fig. 13

Fig. 15

**Fig. 16**

**Fig. 17**

**Fig. 19**

serving gNB

- serving gNB communicates with UE in UL and DL

- receive measurement report from the UE
- handover of UE to another cell?
- Yes
- initiate handover with target cell, including receiving information on the PRACH resources for random access of UE in targe radio cell
- adapt DRX configuration to align DRX off periods with PRACH resources
- inform UE about adapted DRX configuration
- transmit handover command to UE

**Fig. 18**

serving gNB

- serving gNB communicates with UE in UL and DL

- receive measurement report from the UE
- handover of UE to another cell?
- Yes
- initiate handover with target cell, including transmitting information on the DRX configuration of UE to target gNB with handover request message
- receive handover acknowledgement from target gNB
- receive adapted dedicated PRACH resources and C-RNTI assigned to UE by target gNB
- transmit handover command to UE, indicating adapted dedicated PRACH resources

```
                    ┌──────────────┐                          ┌──────────────┐
                    │  target gNB  │                          │  target gNB  │
                    └──────┬───────┘                          └──────┬───────┘
                           │                                         │
              ┌────────────▼────────────┐               ┌────────────▼────────────┐
              │ receive handover request│               │ receive handover request│
              │   from neigbour gNB     │               │   from neigbour gNB     │
              └────────────┬────────────┘               └────────────┬────────────┘
                           │                                         │
              ┌────────────▼────────────┐                            │
              │ receive UE's DRX         │                           │
              │ configuration            │                           │
              │ from neigbour gNB        │                           │
              └────────────┬────────────┘                            │
```

perform random access with UE using the assigned dedicated PRACH resources

**Fig. 20**

**Fig. 21**

UE Start

UE communicates with
serving gNB using all
HARQ processes

receive handover command

select one of the HARQ processes

perform random access
with target gNB
with selected HARQ process

UE communicates with
serving gNB using all
HARQ processes except the
selected HARQ process

Fig. 22

Europäisches
Patentamt

European
Patent Office

Office européen
des brevets

**EUROPEAN SEARCH REPORT**

Application Number

EP 19 15 8914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/381610 A1 (PU TIAN YAN [US] ET AL) 29 December 2016 (2016-12-29) | 1,2,5-8, 10-12,14 | INV. H04W36/00 |
| Y | * paragraphs [0047], [0048], [0059]; | 3,4,13 | |
| A | figures 2, 3 * | 9,15 | |
| | ----- | | |
| X | SONY: "Early Handover Trigger for NW controlled HO, (Mobility Robustness)", 3GPP DRAFT; R2-1901429 NR EARLY_HANDOVERDUALTRIGGER_1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 14 February 2019 (2019-02-14), XP051602788, Retrieved from the Internet: URL:http://www.3gpp.org/ftp/tsg%5Fran/WG2% 5FRL2/TSGR2%5F105/Docs/R2%2D1901429%2Ezip [retrieved on 2019-02-14] | 1,5-8, 10,11,14 | |
| A | * page 2 - page 3 * | 2-4,9, 12,13,15 | TECHNICAL FIELDS SEARCHED (IPC) H04W |
| | ----- | | |
| | -/-- | | |

The present search report has been drawn up for all claims

| Place of search | Date of completion of the search | Examiner |
|---|---|---|
| Munich | 10 April 2019 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | **Application Number**<br>EP 19 15 8914 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HUAWEI: "Discussion on the mobility issues in NTN",<br>3GPP DRAFT; R3-185707 DISCUSSION ON THE MOBILITY ISSUES IN NTN_V0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN<br>,<br>vol. RAN WG3, no. Chengdu, China; 20181008 - 20181012<br>29 September 2018 (2018-09-29),<br>XP051528980,<br>Retrieved from the Internet:<br>URL:http://www.3gpp.org/ftp/tsg%5Fran/WG3%5FIu/TSGR3%5F101bis/Docs/R3%2D185707%2Ezip<br>[retrieved on 2018-09-29] | 4,13 | |
| A | * page 2 * | 5-8,14 | |
| Y | WO 2008/051061 A1 (KOREA ELECTRONICS TELECOMM [KR]; CHANG SUNG-CHEOL [KR] ET AL.) 2 May 2008 (2008-05-02)<br>* claim 7 * | 3 | TECHNICAL FIELDS SEARCHED (IPC) |
| | -----<br>-/-- | | |

The present search report has been drawn up for all claims

| Place of search | Date of completion of the search | Examiner |
|---|---|---|
| Munich | 10 April 2019 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

**Application Number**

EP 19 15 8914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MEDIATEK INC: "UE traffic adaptation for power saving", 3GPP DRAFT; R2-1902214 UE TRAFFIC ADAPTATION FOR POWER SAVING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 15 February 2019 (2019-02-15), XP051603554, Retrieved from the Internet: URL:http://www.3gpp.org/ftp/tsg%5Fran/WG2%5FRL2/TSGR2%5F105/Docs/R2%2D1902214%2Ezip [retrieved on 2019-02-15] * page 3 * ----- | 9,15 | |

**TECHNICAL FIELDS SEARCHED (IPC)**

The present search report has been drawn up for all claims

| Place of search | Date of completion of the search | Examiner |
|---|---|---|
| Munich | 10 April 2019 | Tessier, Serge |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 8914

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2019

| Patent document cited in search report | | Publication date | Patent family member(s) | | Publication date |
|---|---|---|---|---|---|
| US 2016381610 | A1 | 29-12-2016 | CN 106304177 A | | 04-01-2017 |
| | | | EP 3113543 A1 | | 04-01-2017 |
| | | | KR 20170001573 A | | 04-01-2017 |
| | | | US 2016381610 A1 | | 29-12-2016 |
| WO 2008051061 | A1 | 02-05-2008 | KR 20080038071 A | | 02-05-2008 |
| | | | US 2010075663 A1 | | 25-03-2010 |
| | | | WO 2008051061 A1 | | 02-05-2008 |

EPO FORM P0459

For more details about this annex : see Official Journal of the European Patent Office, No. 12/82